# EUROPEAN PATENT APPLICATION

(11) **EP 4 271 019 A1**
(43) Date of publication of application: **01.11.2023**
(21) Application number: 21921488.9
(22) Date of filing: 20.12.2021
(51) Int. Cl.: H04W 12/55, H04W 12/00, H04W 12/06, H04W 8/00, H04W 4/08, H04L 65/40

(54) **ELECTRONIC DEVICE FOR SETTING-UP DATA PATH, AND OPERATION METHOD THEREFOR**

(30) Priority: 20.01.2021 KR 20210008051
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); BANG, Hyejung, Suwon-si, Gyeonggi-do 16677 (KR); KIM, Beomjip, Suwon-si, Gyeonggi-do 16677 (KR); KIM, Hakkwan, Suwon-si, Gyeonggi-do 16677 (KR); LEE, Dooho, Suwon-si, Gyeonggi-do 16677 (KR); LEE, Sunkey, Suwon-si, Gyeonggi-do 16677 (KR); LEE, Soonho, Suwon-si, Gyeonggi-do 16677 (KR); JANG, Wonjun, Suwon-si, Gyeonggi-do 16677 (KR); CHO, Namju, Suwon-si, Gyeonggi-do 16677 (KR)
(74) Representative: Gulde & Partner
(86) International application number: PCT/KR2021/019425
(87) International publication number: WO 2022/158731

(57) **Abstract**

According to various embodiments, an electronic device comprises a communication circuit and at least one processor. The at least one processor may be configured to: by means of the communication circuit, discover, in a discovery window (DW), an external electronic device by performing a service discovery operation on the basis of first security information; by means of the communication circuit, set-up a schedule with the external electronic device; in the set-up schedule, determine a device role of the electronic device in a network including the electronic device and the external electronic device, by performing an authentication operation with the external electronic device on the basis of the first security information; by means of the communication circuit, in the set-up schedule, receive a first message requesting network configuration information related to the configuration of the network from the external electronic device on the basis of the device role; and by means of the communication circuit, in the set-up schedule, transmit, to the external electronic device, a second message including network configuration information which includes a network role of the external electronic device in the network, second security information used to set-up a data path with the external electronic device, and discovery information used for a peer discovery operation. Various other embodiments may be possible.

## Description

### [Technical Field]

Various embodiments of the disclosure relate to an electronic device for setting up a secure data path and an operating method thereof.

### [Background Art]

A wireless communication system is being developed widely in order to provide various types of communication services such as voice or data. Generally, the wireless communication system is a multiple access system which is capable of supporting a communication with a plurality of electronic devices by sharing available system resources (e.g., a frequency resource, a bandwidth resource, or an output power resource). Multiple access systems may include, for example, a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

Various wireless communication technologies are being developed along with the development of an information communication technology. Specially, a wireless local area network (WLAN) technology is technology which may allow an access to Internet in a wireless manner at a home, an office, or a specific service provision area by using an electronic device such as a smart phone, a personal digital assistant (PDA), or a laptop computer based on a wireless frequency technology.

In order to secure flexibility of a communication between devices in a WLAN system, various protocols have been proposed for a direct communication between devices without intervention of a management entity such as a base station (BS) or an access point (AP). Specially, Wi-Fi alliance (WFA) has developed a low-power discovery technology called neighbor awareness networking (NAN) based on a Wi-Fi standard, and a proximity service which is based on the NAN has been actively developed. The NAN standard generally specifies synchronization and discovery procedures between devices in a frequency band of 2.5 GHz or 5 GHz.

### [Detailed Description of the Invention]

### [Technical Problem]

In a NAN technology which is standardized by WFA based on a Wi-Fi standard among wireless communication technologies, when a data path between devices is set up, a procedure of inputting a security key related to security of the data path is essential, and the procedure of inputting the security key may result in unnecessary user intervention, such as security key input by a user or a higher layer, for example, an application layer.

Various embodiments of the disclosure provide an electronic device for setting up a data path and an operating method thereof.

Various embodiments of the disclosure provide an electronic device for setting up a data path for a NAN multicast service group (NMSG) in a NAN network and an operating method.

Various embodiments of the disclosure provide an electronic device for setting up a data path for a plurality of unicast groups in a NAN network and an operating method.

Various embodiments of the disclosure provide an electronic device for setting up a data path based on a provisioning procedure of a device provisioning protocol (DPP) in a NAN network and an operating method thereof.

Various embodiments of the disclosure provide an electronic device for setting up a data path for an NMSG based on a provisioning procedure of a DPP in a NAN network and an operating method thereof.

Various embodiments of the disclosure provide an electronic device for setting up a data path for a plurality of unicast groups based on a provisioning procedure of a DPP in a NAN network and an operating method thereof.

### [Technical Solution]

According to various embodiments of the disclosure, an electronic device may include a communication circuit, and at least one processor operatively connected to the communication circuit, and the at least one processor may be configured to, perform, through the communication circuit, a service discovery operation based on first security information in a discovery window (DW) to discover an external electronic device, set up, through the communication circuit, a schedule with the external electronic device, perform, in the set-up schedule, an authentication operation with the external electronic device based on the first security information to determine a device role of the electronic device in a network including the electronic device and the external electronic device, receive, through the communication circuit, a first message requesting network configuration information related to configuration of the network, from the external electronic device in the set-up schedule based on the device role, and transmit, through the communication circuit, a second message including network configuration information which includes a network role of the external electronic device in the network, second security information used to set up a data path with the external electronic device, and discovery information used for a peer discovery operation, to the external electronic device in the set-up schedule.

According to various embodiments of the disclosure, an electronic device may include a communication circuit, and at least one processor operatively connected to the communication circuit, and the at least one processor may be configured to, perform, through the communication circuit, a service discovery operation based on first security information in a discovery window (DW) to discover an external electronic device, set up, through the communication circuit, a multicast schedule with the external electronic device, perform an authentication operation with the external electronic device based on the first security information in the set-up multicast schedule to determine a device role of the electronic device in a network including the electronic device and the external electronic device, transmit, through the communication circuit, a first message requesting network configuration information related to configuration of the network to the external electronic device based on the device role in the set-up multicast schedule, and receive, through the communication circuit, a second message including network configuration information which includes a network role of the electronic device in the network, second security information used to set up a data path with the external electronic device, and discovery information used for a peer discovery operation, from the external electronic device in the set-up multicast schedule.

According to various embodiments of the disclosure, a method performed by an electronic device may include performing a service discovery operation based on first security information through a discovery window (DW) to discover an external electronic device, setting up a schedule with the external electronic device, performing, through the set-up schedule, an authentication operation with the external electronic device based on the first security information to determine a device role of the electronic device in a network including the electronic device and the external electronic device, receiving, from the external electronic device, a first message requesting network configuration information related to configuration of the network based on the device role through the set-up schedule, and transmitting, to the external electronic device, a second message including network configuration information which includes a network role of the external electronic device in the network, second security information used to set up a data path with the external electronic device, and discovery information used for a peer discovery operation, through the set-up schedule.

According to various embodiments of the disclosure, a method performed by an electronic device may include performing, through a discovery window (DW), a service discovery operation based on first security information to discover an external electronic device, setting up a multicast schedule with the external electronic device, performing, through the set-up multicast schedule, an authentication operation with the external electronic device based on the first security information to determine a device role of the electronic device in a network including the electronic device and the external electronic device, transmitting a first message requesting network configuration information related to configuration of the network to the external electronic device, and receiving, from the external electronic device, a second message including network configuration information which includes a network role of the electronic device in the network, second security information used to set up a data path with the external electronic device, and discovery information used for a peer discovery operation, through the set-up multicast schedule.

### [Brief Description of the Drawings]

FIG. 1 is a block diagram illustrating an electronic device in a network environment according to various embodiments;
FIG. 2 is a diagram schematically illustrating a topology of a neighbor awareness networking (NAN) cluster according to various embodiments;
FIG. 3 is a block diagram schematically illustrating an internal structure of a NAN device according to various embodiments;
FIG. 4 is a diagram schematically illustrating discovery windows (DWs) in a NAN network according to various embodiments;
FIG. 5 is a diagram schematically illustrating a neighbor awareness operation according to various embodiments;
FIG. 6 is a diagram schematically illustrating a NAN security publish/subscribe message flow according to various embodiments;
FIG. 7A is a diagram schematically illustrating an example of a further availability window (FAW) configured based on a NAN availability attribute according to various embodiments;
FIG. 7B is a diagram schematically illustrating another example of an FAW configured based on a NAN availability attribute according to various embodiments;
FIG. 7C is a diagram schematically illustrating still another example of an FAW configured based on a NAN availability attribute according to various embodiments;
FIG. 7D is a diagram schematically illustrating still another example of an FAW configured based on a NAN availability attribute according to various embodiments;
FIG. 8A is a diagram schematically illustrating an example of FAWs configured based on NAN availability attributes and unaligned windows (ULWs) configured based on unaligned schedule attributes according to various embodiments;
FIG. 8B is a diagram schematically illustrating another example of FAWs configured based on NAN availability attributes and ULWs configured based on unaligned schedule attributes according to various embodiments;
FIG. 8C is a diagram schematically illustrating another example of FAWs configured based on NAN availability attributes and ULWs configured based on unaligned schedule attributes according to various embodiments;
FIG. 9 is a signal flow diagram schematically illustrating a NAN device link (NDL) schedule setup handshake operation having an NDL schedule counter proposal according to various embodiments;
FIG. 10 is a diagram schematically illustrating an NDL schedule initial proposal and an NDL schedule compliant proposal of an NDL schedule setup handshake operation according to various embodiments;
FIG. 11 is a diagram schematically illustrating an NDL schedule initial proposal, an NDL schedule counter proposal, and an NDL schedule confirm proposal of an NDL schedule setup handshake operation according to various embodiments;
FIG. 12 is a signal flow diagram schematically illustrating an example of a NAN multicast service group (NMSG) enrollment operation using a 4-way handshake according to various embodiments;
FIG. 13 is a signal flow diagram schematically illustrating another example of an NMSG enrollment operation according to various embodiments;
FIG. 14 is a diagram schematically illustrating an example of an architecture of a device provisioning protocol (DPP) network according to various embodiments;
FIG. 15 is a diagram schematically illustrating an example of a network configuration operation in a DPP network according to various embodiments;
FIG. 16 is a diagram schematically illustrating an example of an enrollment operation in a DPP network according to various embodiments;
FIG. 17 is a diagram schematically illustrating an example of a network connection operation in a DPP network according to various embodiments;
FIG. 18 is a diagram schematically illustrating an example of a provisioning process in a DPP network according to various embodiments;
FIG. 19 is a signal flow diagram schematically illustrating a network access operation using a connector according to various embodiments;
FIGS. 20A and 20B are signal flow diagrams schematically illustrating an example of an operation of setting up a secure data path based on a DPP in a NAN network according to various embodiments;
FIG. 21 is a diagram schematically illustrating an example of an NMSG enrollment operation based on a DPP in a NAN network according to various embodiments;
FIGS. 22A and 22B are signal flow diagrams schematically illustrating an example of an NMSG enrollment operation based on a DPP in a NAN network according to various embodiments;
FIG. 23 is a diagram schematically illustrating an example of an operation of setting up a plurality of unicast NAN data paths (NDPs) based on a DPP in a NAN network according to various embodiments; and
FIGS. 24A and 24B are signal flow diagrams schematically illustrating an example of setting up a plurality of unicast NDPs based on a DPP in a NAN network according to various embodiments.

### [Mode for Carrying out the Invention]

Hereinafter, various embodiments of the disclosure will be described in detail with reference to the accompanying drawings. In the following description of various embodiments of the disclosure, a detailed description of relevant known functions or configurations incorporated herein will be omitted when it is determined that the description may make the subject matter of various embodiments of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe specific embodiments, and are not intended to limit the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used herein should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to described various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, various embodiments of the disclosure will be described in detail with reference to the accompanying drawings. Regardless of drawing signs, the same or like elements are provided with the same reference numeral, and a repeated description thereof will be omitted. Alternatively, in describing various embodiments of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, a terminal will be described in various embodiments of the disclosure, but the terminal may be referred to as an electronic device, a mobile station, a mobile equipment (ME), a user equipment (UE), a user terminal (UT), a subscriber station (SS), a wireless device, a handheld device, and an access terminal (AT). Alternatively, in various embodiments of the disclosure, the terminal may be a device having a communication function such as, for example, a mobile phone, a personal digital assistant (PDA), a smart phone, a wireless MODEM, and a notebook.

In a detailed description of various embodiments of the disclosure, standards provided by institute of electrical and electronics engineers (IEEE) which is a wireless access standardization organization and Wi-Fi alliance (WFA) are referred to, but the main subject of the disclosure can be somewhat modified and applied to other communication systems having a similar technical background without departing from the scope of the disclosure, and the modifications can be made on the basis of determination of those skilled in the art.

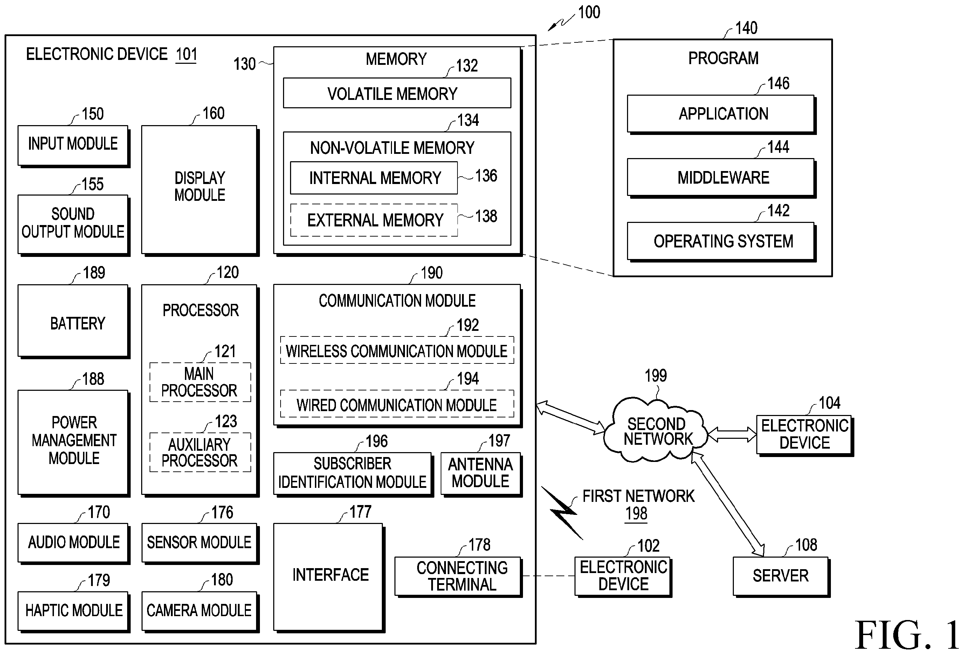

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., an internal memory or an external memory) that is readable by a machine (e.g., a master device or a task performing device). For example, a processor of the machine (e.g., the master device or the task performing device) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to some embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to some embodiments, each component (e.g., a module or a program) of the above-described components may include a single entity or multiple entities. According to some embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to some embodiments, operations performed by the module, the program, or another component may be carried out sequentially, in parallel, repeatedly, or heuristically, or one or more of the operations may be executed in a different order or omitted, or one or more other operations may be added.

A neighbor awareness networking (NAN) network which is based on a Wi-Fi technology may include NAN devices which share common NAN parameters, such as consecutive discovery windows (DWs), time periods of the DWs, a beacon interval, and a NAN discovery channel(s). Here, a NAN device may be a device implementing a NAN protocol. A NAN cluster may be a collection of NAN devices that share a set of NAN parameters and are synchronized with the same DW schedule.

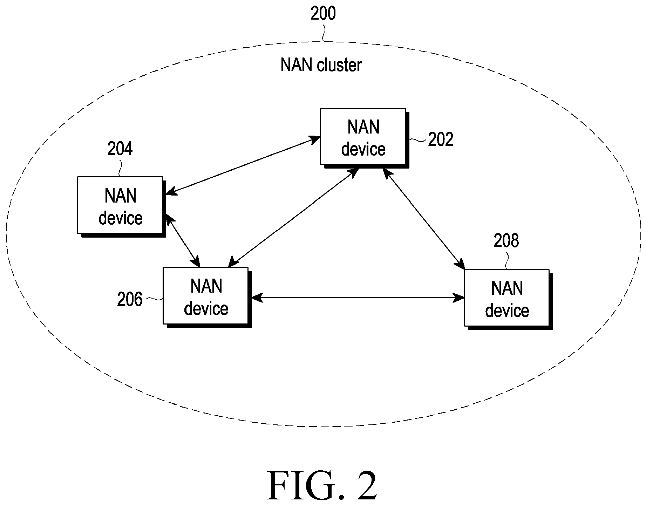

FIG. 2 is a diagram schematically illustrating a topology of a NAN cluster according to various embodiments.

Referring to FIG. 2, in an embodiment, a NAN cluster 200 may include a plurality of electronic devices 202, 204, 206, and/or 208 that support a NAN function. The plurality of electronic devices 202, 204, 206, and/or 208 (e.g., an electronic device 101) included in the NAN cluster 200 may have synchronized time clocks, and each of the plurality of electronic devices 202, 204, 206, and/or 208 (e.g., the electronic device 101) may transmit and receive a beacon frame and a service discovery frame (SDF) in a synchronized DW.

Alternatively, the DW may be a time duration in which an electronic device wakes up. The DW may be implemented in units of milliseconds, and in the DW, current consumption of the electronic device is relatively large, whereas in a time duration other than DW, the electronic device is in a sleep state, so current consumption of the electronic device is relatively small, and thus a low-power discovery operation may be possible. Due to such a DW operation, in a case of NAN technology, current consumption of an electronic device is small and it is advantageous for information exchange between nearby electronic devices, so development of various application services based on the NAN technology is in progress.

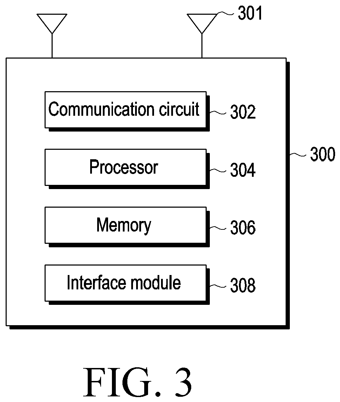

FIG. 3 is a block diagram schematically illustrating an internal structure of a NAN device according to various embodiments.

Referring to FIG. 3, a NAN device 300 (e.g., an electronic device 101) may be a communication device that supports a NAN function, and may be, for example, one of electronic devices 202, 204, 206, and/or 208 illustrated in FIG. 2. The NAN device 300 may include a communication circuit 302 (e.g., a communication module 190 in FIG. 1) which includes a physical (PHY) layer circuit that transmits and receives signals with an external electronic device (e.g., a peer device) using one or more antennas 301, and a medium access control (MAC) layer circuit.

The NAN device 300 may include a processor 304 (e.g., a processor 120 in FIG. 1) which may be implemented as one or more uni-core processors or one or more multi-core processors, and a memory 306 (e.g., a memory 130 in FIG. 1) that stores instructions for an operation of the NAN device 300.

The NAN device 300 may include an interface module 308 (e.g., an interface 177 in FIG. 1) that provides a wired and/or wireless interface for communicating with components outside a network. At least some of the antenna 301, the communication circuit 302, or the interface module 308 may be implemented as at least part of the communication module 190 and the antenna module 198 in FIG. 1.

The communication circuit 302 and the processor 304 may process various wireless control functions so as to communicate with one or more wireless networks according to one or more wireless technologies. The wireless technologies may include, for example, worldwide interoperability for microwave access (WiMax), Wi-Fi, global system for mobile communications (GSM), enhanced data rates for GSM (EDGE), GSM EDGE radio access network (GERAN), universal mobile telecommunication system (UMTS), UTRAN terrestrial radio access network (UTRAN), 3G, 4G, 5G, or beyond-5G, which were developed or are to be developed in the future.

According to various embodiments of the disclosure, an electronic device (e.g., an electronic device 101 in FIG. 1) may include a communication circuit (e.g., a communication circuit 302 in FIG. 3), and at least one processor 304 (e.g., processor 304 in FIG. 3) operatively connected to the communication circuit 302. The at least one processor 304 may be configured to, perform, through the communication circuit 302, a service discovery operation based on first security information in a DW to discover an external electronic device 102 or 104 (e.g., an electronic device 102 or an electronic device 104 in FIG. 1), set up, through the communication circuit 302, a schedule with the external electronic device 102 or 104, perform, in the set-up schedule, an authentication operation with the external electronic device 102 or 104 based on the first security information to determine a device role of the electronic device 101 in a network including the electronic device 101 and the external electronic device 102 or 104, receive, from the external electronic device 102 or 104 through the communication circuit 302, a first message requesting network configuration information related to configuration of the network based on the device role in the set-up schedule, and transmit, through the communication circuit 302, a second message including network configuration information which includes a network role of the external electronic device 102 or 104 in the network, second security information used to set up a data path with the external electronic device 102 or 104, and discovery information used for a peer discovery operation, to the external electronic device 102 or 104 in the set-up schedule.

According to various embodiments of the disclosure, the at least one processor 304 may be further configured to perform, through the communication circuit 302, the peer discovery operation with the external electronic device 102 or 104 based on the discovery information in the set-up schedule to verify the external electronic device 102 or 104.

According to various embodiments of the disclosure, the at least one processor 304 may be further configured to set up, through the communication circuit 302, a data path with the external electronic device 102 or 104 in the set-up schedule.

According to various embodiments of the disclosure, the at least one processor 304 may be configured to transmit, through the communication circuit 302, a data path confirm message to the external electronic device 102 or 104 in the set-up schedule, receive, through the communication circuit 302, a data path security install message including third security information in the set-up schedule in response to the data path confirm message, and set up the data path with the external electronic device 102 or 104 through the communication circuit 302 if the second security information and the third security information match.

According to various embodiments of the disclosure, the at least one processor 304 may be configured to, transmit, through the communication circuit 302, an authentication request message including the first security information and first device role information indicating a device role intended by the electronic device 101, to the external electronic device 102 or 104 in the set-up schedule, receive, through the communication circuit 302, an authentication response message including first status information indicating status related to the authentication request message, the first security information, and second device role information indicating a device role intended by the external electronic device 102 or 104 from the external electronic device 102 or 104 in the set-up schedule, and transmit, through the communication circuit 302, an authentication confirm message including second status information indicating status related to the authentication response message, the first security information, and device role information indicating the device role of the electronic device 101 to the external electronic device 102 or 104 in the set-up schedule to determine the device role of the electronic device 101.

According to various embodiments of the disclosure, if a device role intended by the electronic device 101 indicated by the first device role information and a device role intended by the external electronic device 102 or 104 indicated by the second device role information are the same, the device role information may be determined based on a first value included in the authentication request message and a second value included in the authentication response message.

According to various embodiments of the disclosure, the at least one processor 304 may be configured to, receive, through the communication circuit 302, a publish message from the external electronic device 102 or 104 in the DW, and discover the external electronic device 102 or 104 if the publish message includes authentication information identical to the first authentication information.

According to various embodiments of the disclosure, the device role of the electronic device 101 may be a configurator providing the network configuration information, the device role of the external electronic device 102 or 104 may be an enrollee which is enrolled in the network managed by the configurator, the network role of the electronic device 101 may be a data path initiator requesting setup of the data path, or the network role of the external electronic device 102 or 104 may be a data path responder responding to the request for the setup of the data path.

According to various embodiments of the disclosure, an electronic device (e.g., an electronic device 101 in FIG. 1) may include a communication circuit (e.g., a communication circuit 302 in FIG. 3), and at least one processor 304 (e.g., processor 304 in FIG. 3) operatively connected to the communication circuit 302. The at least one processor 304 may be configured to perform, through the communication circuit 302, a service discovery operation based on first security information in a discovery window (DW) to discover an external electronic device (e.g., an electronic device 102 or an electronic device 104 in FIG. 1), set up, through the communication circuit 302, a multicast schedule with the external electronic device 102 or 104, perform, , an authentication operation with the external electronic device 102 or 104 based on the first security information in the set-up multicast schedule to determine a device role of the electronic device 101 in a network including the electronic device 101 and the external electronic device 102 or 104, transmit, through the communication circuit 302, a first message requesting network configuration information related to configuration of the network to the external electronic device 102 or 104 based on the device role in the set-up multicast schedule, and receive, through the communication circuit 302, a second message including network configuration information which includes a network role of the electronic device 101 in the network, second security information used to set up a data path with the external electronic device 102 or 104, and discovery information used for a peer discovery operation, from the external electronic device 102 or 104 in the set-up multicast schedule.

According to various embodiments of the disclosure, the at least one processor 304 may be further configured to perform, through the communication circuit 302, the peer discovery operation with the external electronic device 102 or 104 based on the discovery information in the set-up multicast schedule to verify the external electronic device 102 or 104.

According to various embodiments of the disclosure, the at least one processor 304 may be further configured to set up, through the communication circuit 302, a data path with the external electronic device 102 or 104 in the set-up multicast schedule.

According to various embodiments of the disclosure, the at least one processor 304 may be further configured to discover, through the communication circuit 302, another external electronic device 102 or 104 based on the first security information in the DW, set up, through the communication circuit 302, another multicast schedule with the other external electronic device 102 or 104, perform, , an authentication operation with the other external electronic device 102 or 104 based on the first security information to re-determine the device role of the electronic device 101 in the network including the electronic device 101 and the other external electronic device 102 or 104 in the set-up other multicast schedule, receive, through the communication circuit 302, a third message requesting network configuration information related to the configuration of the network based on the re-determined device role from the other external electronic device 102 or 104 in the set-up other multicast schedule, and transmit, through the communication circuit 302, a fourth message including a network role of the other external electronic device 102 or 104 in the network, and third security information used to set up another data path with the other external electronic device102 or 104 to the other external electronic device 102 or 104 in the set-up other multicast schedule.

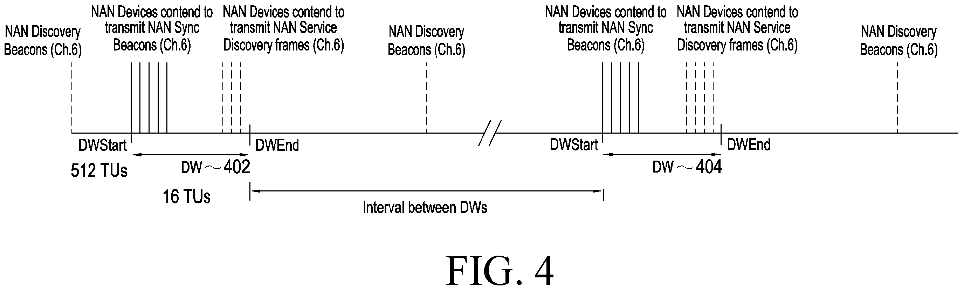

FIG. 4 is a diagram schematically illustrating DWs in a NAN network according to various embodiments.

Referring to FIG. 4, an electronic device included in a NAN cluster may activate DWs 402 and 404 whose length is set from a DW starting time (DWstart). As such, the electronic device included in the NAN cluster may be synchronized to a time clock, and may transmit and receive a synchronization beacon frame, an SDF, and/or a NAN action frame (NAF) using a channel, e.g., a channel 6 within the DWs 402 and 404 activated at the same time.

In an embodiment, in a NAN network, various types of NAFs may exist, and the various types of NAFs may include a message for setting up a NAN data path (NDP) for performing a data communication in a duration between the DWs 402 and 404, or a message for performing NAN ranging in a fine time measurement (FTM) duration. In an embodiment, the NAN ranging may be a function capable of measuring a distance between two NAN devices within the NAN cluster.

In an embodiment, the electronic device may transmit at least one synchronization beacon frame within one DW 402 or 404. In the duration between the DWs 402 and 404, the electronic device may transmit a discovery beacon frame to enable an external electronic device to discover the NAN cluster.

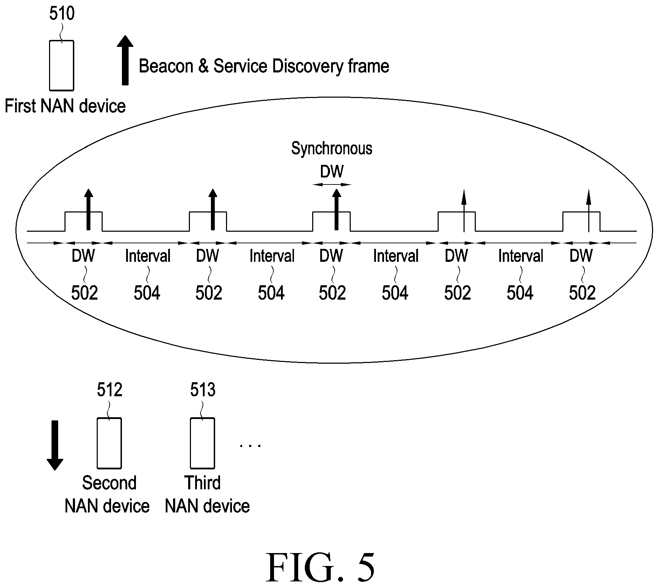

FIG. 5 is a diagram schematically illustrating a neighbor awareness operation according to various embodiments.

Referring to FIG. 5, a first NAN device 510 (e.g., an electronic device 101) in a NAN cluster may activate a DW 502 at an agreed time according to a synchronized time clock in the NAN cluster, and may transmit a synchronization beacon frame and an SDF in the DW 502. A second NAN device 512 and a third NAN device 513 existing around the first NAN device 510 may receive the synchronization beacon frame and the SDF transmitted from the first NAN device 510, may be synchronized with the time clock of the first NAN device 510, and may obtain NAN parameters of the NAN cluster.

Although not illustrated in FIG. 5, the first NAN device 510, the second NAN device 512, and the third NAN device 513 may transmit and receive various NAFs in the DW 502.

Meanwhile, in a NAN network, message exchange may be possible not only within a DW but also in intervals 504 between the DWs 502. For example, an electronic device (e.g., the first NAN device 510) may set additional active time slots in the intervals 504 between the DWs 502 or set additional active time slots through negotiation with an external electronic device, for example, a peer device (e.g., the second NAN device 512 or the third NAN device 513), and perform an additional communication during the active time slots.

For example, a service discovery function not performed during the DW 502 may be additionally performed in an interval, e.g., the interval 504, between the DWs 502, and the interval 504 may be used to designate an operation for Wi-Fi direct, mesh, an independent basic service set (IBSS), and a WLAN connection, or to perform a connection and/or discovery based on legacy Wi-Fi.

In an embodiment, in order to support ranging between electronic devices through an FTM, the electronic device (e.g., the first NAN device 510) may set up a session for NAN ranging in the DW 502, and may define additional time slots within the interval 504 which may be used for the ranging.

In an embodiment, an NDP technology in the NAN network is based on non-connection, so it enables a data communication with relatively fast setup time and enables a flexible data communication with a plurality of electronic devices. In an embodiment, a NAN device in the NAN network may set time slots to be used as an NDP for data transmission through the interval 504 between the DWs 502 without a separate connection, and data transmitted through the NDP may be encrypted with security.

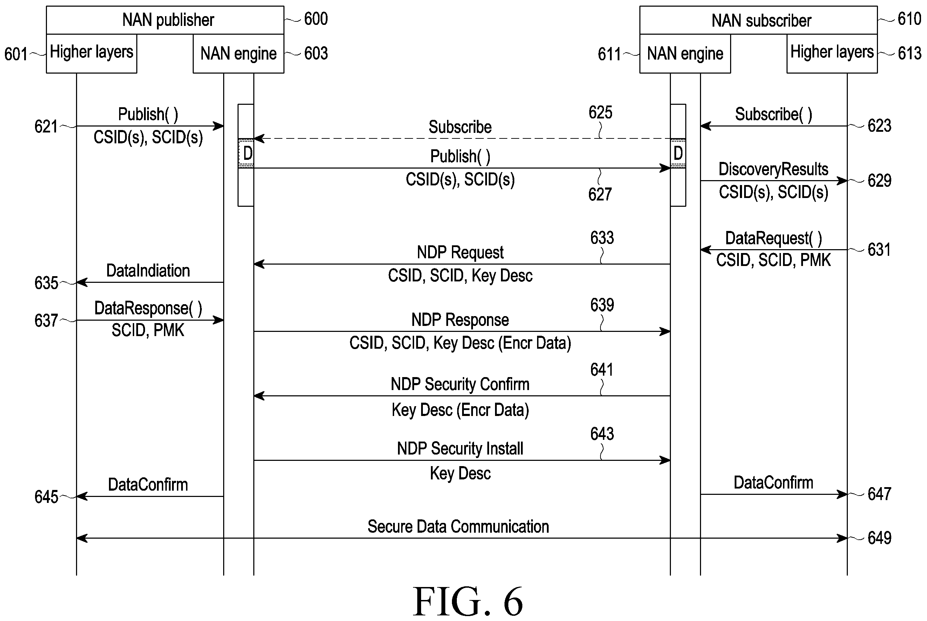

FIG. 6 is a diagram schematically illustrating a NAN security publish/subscribe message flow according to various embodiments.

FIG. 6 illustrates a message flow using NAN publish/subscribe messages for advertising supported cipher suites and available security context identifiers to allow inclusion of cipher suite proposals, supported security context Identifiers and their confirmation as part of NDP negotiation when a NAN shared key cipher suite (NCS-SK) is used as a cipher suite for security setup.

Referring to FIG. 6, an electronic device (e.g., an electronic device 101 in FIG. 1), e.g., a NAN publisher 600 may include higher layers 601 and a NAN engine 603, and an external electronic device (e.g., an external electronic device 102 in FIG. 1), e.g., a NAN subscriber 610 may include a NAN engine 611 and higher layers 613. In an embodiment, each of the NAN engine 603 and the NAN engine 611 may include, for example, a NAN discovery engine, ranging, a NAN data engine, a NAN scheduler, and/or a NAN MAC layer.

In operation 621, the higher layers 601 of the NAN publisher 600 may transfer, to the NAN engine 603 of the NAN publisher 600, a publish message advertising at least one of at least one supported cipher suite identifier (CSID), or at least one available security context identifier. In an embodiment, an available security context identifier may include a security context identifier (SCID).

In operation 623, the higher layers 613 of an initiating NAN device, e.g., the NAN subscriber 610, may transfer a subscribe message to the NAN engine 611 to actively search for availability for a specific service.

In operation 625, the NAN engine 611 of the NAN subscriber 610 may transmit a subscribe message in a DW. In operation 627, the NAN engine 603 of the NAN publisher 600 may transmit a publish message in the DW.

In operation 629, the NAN engine 611 of the NAN subscriber 610 may generate a discovery request message based on the received publish message, and transfer the generated discovery request message to the higher layers 613 of the NAN subscriber 610. In an embodiment, the discovery request message may include, for example, the at least one CSID or the at least one SCID which are included in the publish message.

The higher layers 613 of the NAN subscriber 610 may select a suitable CSID and SCID for performing NDP negotiation and establishing NAN pairwise security association (SA). In operation 631, the higher layers 613 of the NAN subscriber 610 may transfer a data request message including the selected CSID and SCID and a pairwise master key (PMK) to the NAN engine 611 of the NAN subscriber 610.

Meanwhile, a message flow used with an NCS-SK to establish NAN pairwise SA may have a form similar to a robust security network association (RSNA) 4-way handshake process as defined in an IEEE 802.11 standard, however, a key descriptor is transferred in extensible authentication protocol over LAN (EAPOL) frames in the IEEE 802.11 standard, whereas an NCS-SK key descriptor may be transferred in a NAN shared key descriptor attribute which will be included in NDP negotiation messages in the NAN network. Contents of key information included in a descriptor having the NCS-SK may have the same semantics as the key descriptor of the IEEE 802.11 standard.

A process which may correspond to the RSNA 4-way handshake process may be a process including transmission of an NDP request message in operation 633, transmission of an NDP response message in operation 639, transmission of an NDP security confirmation message in operation 641, and transmission of NDP security install message in operation 643.

In operation 633, the NAN engine 611 of the NAN subscriber 610 may transmit, to the NAN publisher 600, the NDP request message including the CSID and SCID transferred from the higher layers 613 of the NAN subscriber 610, and a key descriptor (Key Desc).

In operation 635, the NAN engine 603 of the NAN publisher 600 may transfer a data indication message to the higher layers 601 of the NAN publisher 600 when receiving the NDP request message. In operation 637, when receiving the data indication message from the NAN engine 603 of the NAN publisher 600, the higher layers 601 of the NAN publisher 600 may transfer a data response message which is a response message to the data indication message to the NAN engine 603 of the NAN publisher 600. In an embodiment, the data response message in operation 637 may include an SCID and a PMK.

In operation 639, when receiving the data response message from the higher layers 601 of the NAN publisher 600, the NAN engine 603 of the NAN publisher 600 may transmit the NDP response message which is a response message to the NDP request message to the NAN subscriber 610. In an embodiment, the NDP response message in operation 639 may include a CSID, an SCID, and Key Desc (Encr Data). In operation 641, when receiving the NDP response message, the NAN engine 611 of the NAN subscriber 610 may transmit the NDP security confirmation message to the NAN publisher 600. In an embodiment, the NDP security confirmation message in operation 641 may include Key Desc (Encr Data).

In operation 643, when receiving the NDP security confirmation message, the NAN engine 603 of the NAN publisher 600 may transmit the NDP security install message to the NAN subscriber 610. In an embodiment, the NDP security install message in operation 643 may include a Key Desc. In operation 645, when transmitting the NDP security install message, the NAN engine 603 of the NAN publisher 600 may transfer a data confirm message to the higher layers 601 of the NAN publisher 600. In an embodiment, when receiving the NDP security install message, the NAN engine 611 of the NAN subscriber 610 may transfer a data confirm message to the higher layers 613 of the NAN subscriber 610.

In operation 649, a security data communication may be possible between the NAN publisher 600 and the NAN subscriber 610.

Meanwhile, an SCID attribute field for the SCID used in the NAN security publish/subscribe message flow in FIG. 6 may be represented as in Table 1 below.

**[Table 1]**

| **Field** | **Size (octets)** | **Value** | **Description** |
|---|---|---|---|
| Security Context Identifier Type Length | 2 | Variable | Identifies the length of the Security Context identifier field |
| Security Context Identifier Type | 1 | Variable | The type of Security Context Identifier. |
| | | | 0 - Reserved |
| | | | 1 - PMKID |
| | | | 2 - 255: Reserved |
| Publish ID | 1 | Variable | Identifies the Publish Service Instance |
| Security Context Identifier | Variable | Variable | Identifies the Security Context. For NAN Shared Key Cipher Suite, this field contains the 16 octet PMKID identifying the PMK used for setting up the Secure Data Path. |

In Table 1, a security context identifier type length field may be implemented, for example, with 2 octets, and may be used to identify a length of an SCID field. In Table 1, a security context identifier type field may be implemented with, for example, 1 octet, and may indicate a type of the SCID. For example, if a field value of the Security Context Identifier Type field is "1", it may indicate a pairwise master key identifier (PMKID).

In Table 1, a publish ID field may be implemented with, for example, 1 octet, and may be used to identify a publish service instance. A security context identifier field may be used to identify a security context. For an NCS-SK, the Security Context Identifier field may include a 16 octet-PMKID which identifies protected management frames (PMFs) used to set up a secure data path.

Meanwhile, in a NAN network as described above, NAN devices may set additional time slots in an interval between synchronized DWs and perform a data communication without a connection in the set time slots. In this case, security may or may not be set for the data communication.

However, in order to set the security for the data communication in the NAN network, an SCID type of a PMKID type needs to be used as described in FIG. 6, and for this, a key input procedure to input a key such as pass-phrase in a user or higher layers, e.g., an application layer may be required.

Such a key input procedure may require unnecessary key input from a user of a NAN device. However, although a procedure for setting security is currently regulated in the NAN network, a procedure for exchanging security information independently in the NAN network without user intervention is not separately regulated.

Next, a NAN scheduler according to various embodiments of the disclosure will be described.

A pair of NAN devices may establish a NAN device link (NDL) including a data communication. In an embodiment, the NDL represents negotiated resource blocks between a pair of NAN devices used for NAN operations. The NDL may include one or more NDPs, and each NDP may represent a data connection established between the pair of NAN devices for a service instance.

In an embodiment, each NDL may have a unique NDL schedule, an NDL schedule may represent a superset of a NAN data cluster (NDC) schedule, an NDC may represent a collection of NDLs using the same NDC base schedule, and an NDC schedule may represent a set of resource blocks when NAN devices of the same NDC are awake.

A NAN scheduler may be included in each NAN device, may establish, maintain, and terminate Wi-Fi radio frequency schedules for NAN operations, and may coordinate concurrent NAN and non-NAN operations. In an embodiment, the NAN scheduler may publish its potential and committed availability schedules to interested external electronic devices and peer devices in the same NAN cluster, and collect potential and committed availability schedules of the peer devices. In an embodiment, availability schedules of a NAN device may include DWs, further availability windows (FAWs), and unaligned windows (ULWs). In an embodiment, a non-NAN operation may include, for example, a WLAN infrastructure, a P2P operation, an IBSS, mesh, Wi-Fi Direct, or mobile hotspot.

The NAN device may support a function to schedule a radio resource for concurrent operation of all NAN operations and non-NAN operations. The NAN device may transfer schedule information including available time and band/channel for concurrent operation of NAN operations and non-NAN operations to neighboring NAN devices. The NAN device may transmit and receive, through frames in a DW, NAN availability attributes for supporting an NDP, ranging, and/or non-NAN operation, and/or the like in an interval between DWs. In an embodiment, the NAN availability attributes may be included in management frames such as a beacon frame, an SDF, or an NAF transmitted within the DW.

NAN usability attributes will be described.

A NAN availability attribute may be an attribute for setting FAWs to allocate and use a radio resource for a NAN operation and a non-NAN operation in an interval between DWs. In an embodiment, the NAN availability attribute may be included in management frames such as a beacon frame, an SDF, or an NAF, and one or more NAN availability attributes may be included in the management frames. One or more FAWs may be allocated in a unit of time slot (or a NAN slot) which is a unit of radio resource, and each time slot may have a length of 16 time units (TUs) (e.g., a millisecond) in a time domain.

A NAN availability attribute used to determine an FAW is as shown in Table 2 below.

**[Table 2]**

| **Field** | **Size (octets)** | **Value** |
|---|---|---|
| Attribute ID | 1 | 0x12 |
| Length | 2 | Variable |
| Sequence ID | 1 | Variable |
| Attribute Control | 2 | Variable |
| Availability Entry List | Variable | Variable |

In Table 2, an attribute ID field may identify a type of a NAN attribute (the type of a NAN attribute), a length field may indicate a length of fields following the length field (the length in octets of the fields following the length field in the attribute), a sequence ID may include an integer value indicating a sequence of a related attribute schedule, an attribute control field may indicate whether a change in the NAN attribute is Committed Changed, Potential Changed, or public availability attribute changed, and an availability entry list field may include one or more attribute entries indicating an attribute of a NAN device in one or more FAWs. Each attribute entry may define one or a series of FAWs. One attribute entry may define the series of FAWs within a time interval which starts from a starting point of a previous DW and may have a length of, for example, 1 to 512 time slots. In an embodiment, the series of FAWs may exist repeatedly.

Meanwhile, a tree of main fields of a NAN availability attribute used to determine an FAW is shown in Table 3 below.

**[Table 3]**

| | | | | | |
|---|---|---|---|---|---|
| | NAN Availability attribute | | | | |
| | | - Availability Entry List | | | |
| | | | - Availability Entry | | |
| | | | | - Band/Channel Entry List | |
| | | | | | - List of Band Entries |
| | | | | | - Channel Entry |
| | | | | - Time Bitmap Control field | |
| | | | | | - Bit Duration |
| | | | | | - Period |
| | | | | | - Start Offset |

In Table 3, an availability entry list field may include one or more availability entries, and may include an entry control field indicating availability entry control information, an operating class indicating a frequency band in which a NAN device will be available, and a channel number indicating a channel in which the NAN device will be available.

In Table 3, an availability entry field may indicate one or a series of FAWs, and a band/channel entry list field may indicate one or more band or channel entries which correspond to a corresponding availability entry. In Table 3, a list of band entries field may be a field indicating a specific band (e.g., 2.4 GHz or 5 GHz). In an embodiment, the List of Band Entries field may be represented as shown in Table 4 below.

**[Table 4]**

| **Band ID** | **Meaning** |
|---|---|
| 0 | Reserved (for TV white spaces) |
| 1 | Sub-1 GHz (excluding TV white spaces) |
| 2 | 2.4 GHz |
| 3 | Reserved (for 3.6 GHz) |
| 4 | 4.9 and 5 GHz |
| 5 | Reserved (for 60 GHz) |
| 6-255 | Reserved |

As shown in [Table 4], a band to be used as an FAW (e.g., 2.4 GHz or 5 GHz) may be indicated based on the List of Band Entries field.

In Table 3, a channel entry field may be used to specify an operating class and a primary channel, and may be represented as shown in Table 5 below.

**[Table 5]**

| **Field** | **Size (octets)** | **Value** |
|---|---|---|
| Operating Class | 1 | Variable |
| Channel Bitmap | 2 | Variable |
| Primary Channel Bitmap | 1 | Variable |
| Auxiliary Channel Bitmap | 2 | Variable |

In Table 5, an Operating Class field may indicate a predefined global operating class. In Table 5, a channel bitmap field may indicate channels for a given operating class, and one or more channels may be defined per Operating Class. In Table 5, a primary channel bitmap field may indicate a set of selected preferred primary channels. In Table 5, an auxiliary channel bitmap field exists only when a non-contiguous bandwidth field is set to "1", and for an 80+80 MHz operating class bandwidth, it indicates a channel center frequency index of an 80 MHz channel of a frequency segment 1 in which a corresponding device operates, and a bit i of the auxiliary channel bitmap is set to "1" when the i-th channel is selected among possible channels in the corresponding operating class.

In Table 3, a format of a time bitmap control field may be represented as shown in Table 6 below.

**[Table 6]**

| **Bit(s)** | **Field** | **Notes** | |
|---|---|---|---|
| 0-2 | Bit Duration | 0:16 TU | |
| | | 1:32 TU | |
| | | 2:64 TU | |
| | | 3:128 TU | |
| | | 4-7 reserved | |
| 3-5 | Period | indicate the repeat interval of the following bitmap. When set to 0, the indicated bitmap is not repeated. | |
| | | When set to non-zero, the repeat interval is: | |
| | | | 1:128 TU |
| | | | 2: 256 TU |
| | | | 3: 512 TU |
| | | | 4: 1024 TU |
| | | | 5: 2048 TU |
| | | | 6: 4096 TU |
| | | | 7: 8192 TU |
| 6-14 | Start Offset | Start Offset is an integer. The time period specified by the Time Bitmap field starts at the 16 * Start Offset TUs after DW0. Note that the NAN Slots not covered by any Time Bitmap are assumed to be NOT available. | |
| 15 | Reserved | Reserved | |

In Table 6, a Bit Duration field may indicate a time unit used to describe an FAW. That is, the Bit Duration field may indicate a duration of the FAW. For example, if a corresponding bit in a Time Bitmap is set to "1", it may indicate that a whole time duration within a corresponding FAW is available, and if the corresponding bit in the Time Bitmap is set to "0", it may indicate that the whole time duration within the corresponding FAW is unavailable.

In Table 6, a Period field may be a field indicating at what period a corresponding FAW starts, and may indicate whether the corresponding FAW is repeated at a repeat interval. For example, if a field value of the Period field is set to 0, it may indicate that the corresponding FAW is not repeated, and if the field value of the Period field is set to a value other than 0, it may indicate that the corresponding FAW is repeated at a repetition interval among 128 TU, 256 TU, 512 TU, 1024 TU, 2048 TU, 4096 TU, or 8192 TU.

In Table 6, a Start Offset field may indicate how much time after a DW0 a corresponding FAW starts, so a starting time point of the FAW may be identified based on the Start Offset field.

Considering attributes and fields as described above, FAWs which may be used for a NAN data communication may be scheduled based on a List of Band Entries field or a Channel Entry field of a Band/Channel Entry List of a NAN availability attribute, and a Bit Duration field, a Period field, and/or a Start Offset field of a Time Bitmap Control field.

In an embodiment, a plurality of NAN availability attributes may be used, so various FAWs may be configured based on a combination of the plurality of NAN availability attributes.

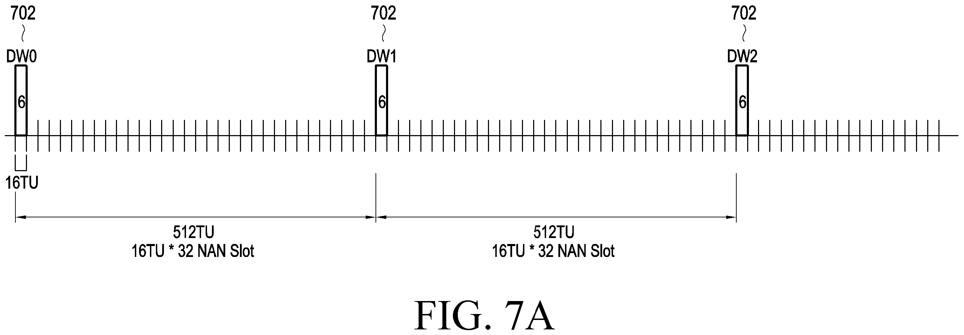

FIGS. 7A to 7D are diagrams schematically illustrating examples of FAWs configured based on a NAN availability attribute according to various embodiments.

FIG. 7A is a diagram schematically illustrating an example of an FAW configured based on a NAN availability attribute according to various embodiments.

Referring to FIG. 7A, an interval between DWs 702 (e.g., a DW1, a DW2, or a DW3) is 512 TU (= 16 TU * 32 NAN slots), NAN availability attributes for a NAN operation are not configured in a period between the DWs 702, and a NAN device may maintain a sleep state between the DWs 702.

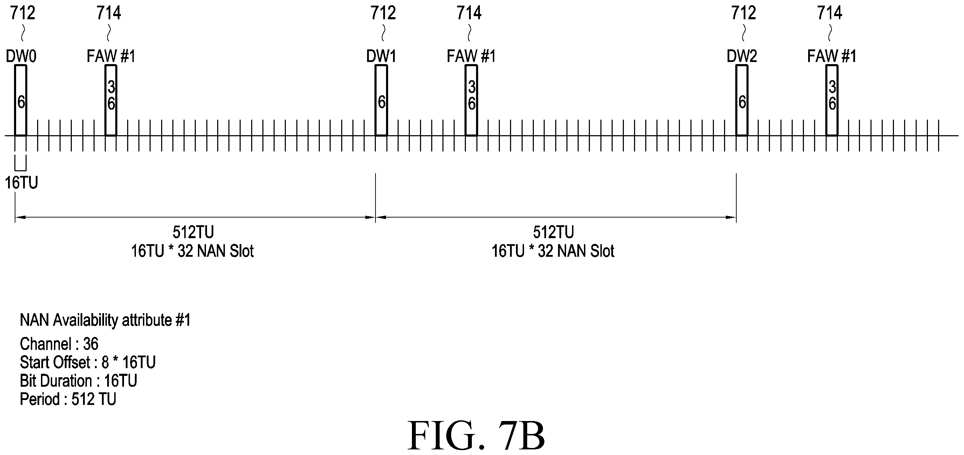

FIG. 7B is a diagram schematically illustrating another example of an FAW configured based on a NAN availability attribute according to various embodiments.

Referring to FIG. 7B, an FAW, e.g., an FAW #1 714, is configured based on a NAN availability attribute, e.g., a NAN availability attribute #1, among DWs 712 (e.g., a DW1, a DW2, or a DW3). In an embodiment, the FAW #1 714 is an FAW which is configured if a channel 36 is indicated through a Channel Entry field of a Band/Channel Entry List of the NAN availability attribute, a duration of an FAW is indicated as 16 TUs through a Bit Duration field of a Time Bitmap Control field, a repetition duration, i.e., a period, of the FAW is indicated as 512 TUs through a Period field of the Time Bitmap Control field, and a start offset of 8 is indicated through a Start Offset field of the Time Bitmap Control field.

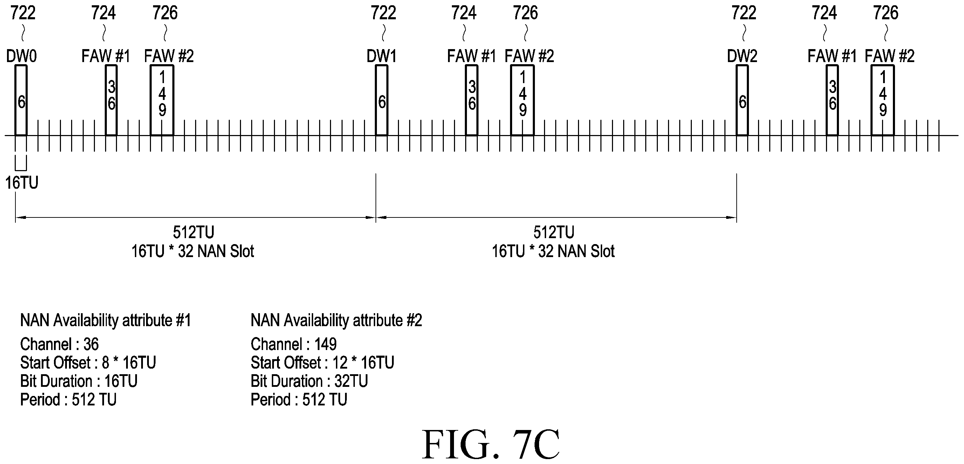

FIG. 7C is a diagram schematically illustrating still another example of an FAW configured based on a NAN availability attribute according to various embodiments.

Referring to FIG. 7C, an FAW #1 724 and an FAW #2 726 are configured based on a NAN availability attribute #1 and a NAN availability attribute #2 among DWs 722 (e.g., a DW1, a DW2, or a DW3).

In an embodiment, the FAW #1 724 is an FAW which is configured if a channel 36 is indicated through a Channel Entry field of a Band/Channel Entry List of the NAN availability attribute, a duration of an FAW is indicated as 16 TUs through a Bit Duration field of a Time Bitmap Control field, a repetition duration, i.e., a period, of the FAW is indicated as 512 TUs through a Period field of the Time Bitmap Control field, and a start offset of 8 * 16TUs is indicated through a Start Offset field of the Time Bitmap Control field. In an embodiment, the FAW #2 726 is an FAW which is configured if a channel 149 is indicated through a Channel Entry field of a Band/Channel Entry List of the NAN availability attribute, a duration of an FAW is indicated as 32 TUs through a Bit Duration field of a Time Bitmap Control field, a repetition duration, i.e., a period, of the FAW is indicated as 512 TUs through a Period field of the Time Bitmap Control field, and a start offset of 12 * 16TUs is indicated through a Start Offset field of the Time Bitmap Control field.

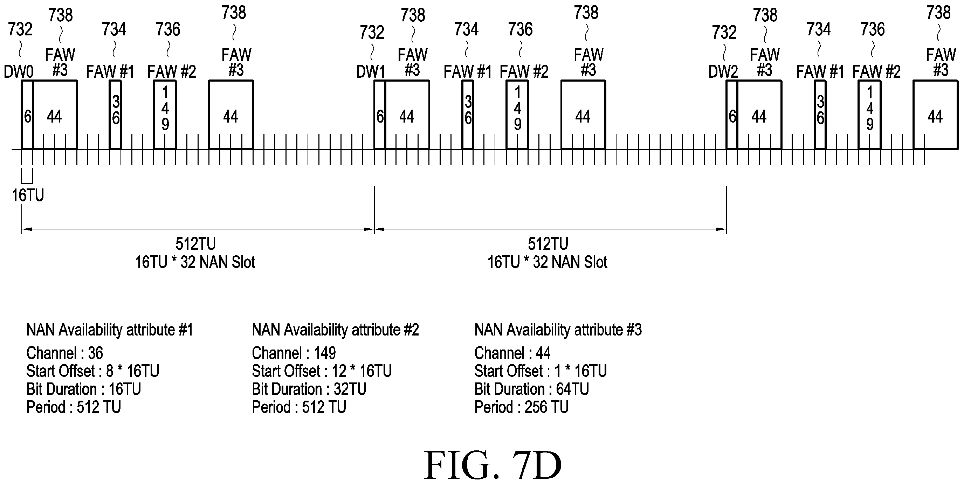

FIG. 7D is a diagram schematically illustrating still another example of an FAW configured based on a NAN availability attribute according to various embodiments.

Referring to FIG. 7D, an FAW #1 734, FAW #2 736, and an FAW #3 728 are configured based on a NAN availability attribute #1, a NAN availability attribute #2, and a NAN availability attribute #3 among DWs 732 (e.g., a DW1, a DW2, or a DW3).

In an embodiment, the FAW #1 734 is an FAW which is configured if a channel 36 is indicated through a Channel Entry field of a Band/Channel Entry List of the NAN availability attribute, a duration of an FAW is indicated as 16 TUs through a Bit Duration field of a Time Bitmap Control field, a repetition duration, i.e., a period, of the FAW is indicated as 512 TUs through a Period field of the Time Bitmap Control field, and a start offset of 8 * 16TUs is indicated through a Start Offset field of the Time Bitmap Control field. The FAW #2 736 is an FAW which is configured if a channel 149 is indicated through a Channel Entry field of a Band/Channel Entry List of the NAN availability attribute, a duration of an FAW is indicated as 32 TUs through a Bit Duration field of a Time Bitmap Control field, a repetition duration, i.e., a period, of the FAW is indicated as 512 TUs through a Period field of the Time Bitmap Control field, and a start offset of 12 * 16TUs is indicated through a Start Offset field of the Time Bitmap Control field. The FAW #3 738 is an FAW which is configured if a channel 44 is indicated through a Channel Entry field of a Band/Channel Entry List of the NAN availability attribute, a duration of an FAW is indicated as 64 TUs through a Bit Duration field of a Time Bitmap Control field, a repetition duration, i.e., a period, of the FAW is indicated as 256 TUs through a Period field of the Time Bitmap Control field, and a start offset of 1 * 16TUs is indicated through a Start Offset field of the Time Bitmap Control field.

Next, a non-NAN operation and an unaligned schedule attribute will be described.

In an embodiment, a NAN device may use an unaligned schedule attribute for configuring ULWs to allocate a radio resource for a non-NAN operation (e.g., Bluetooth, Wi-Fi, or Wi-Fi Direct) between DWs. In an embodiment, unaligned schedule attributes may be transferred in a unicast frame, a multicast frame, or a broadcast frame. One or more non-aligned schedule attributes may be transferred in a frame to indicate a plurality of non-aligned schedules of the NAN device, and the frame transferring a non-aligned schedule attribute may include NAN management frames such as, for example, a beacon frame, an SDF, and an NAF transmitted within a DW. A ULW may be a time period in units of milliseconds and may be scheduled in a time interval between DWs. If schedules of the ULW and an FAW overlap, the UWL may have priority over the FAW in a NAN network.

In an embodiment, an unaligned schedule attribute may indicate a series of ULWs, and the unaligned schedule attribute may be represented as shown in Table 7 below.

**[Table 7]**

| **Field** | **Size (octets)** | **Value** |
|---|---|---|
| Attribute ID | 1 | 0x17 |
| Length | 2 | Variable |
| Attribute Control | 2 | Variable |
| Starting Time | 4 | Variable |
| Duration | 4 | Variable |
| Period | 4 | Variable |
| Count Down | 1 | Variable |
| ULW Overwrite | 1 | Variable |
| ULW Control | 0 or 1 | Variable |
| Band ID or Channel Entry | Variable | Variable |

In Table 7, the 'Attribute ID' field identifies the type of NAN attribute, the 'Length' field indicates a length of following fields (the length of the following fields in the attribute), the 'Attribute Control' field identifies a related unaligned schedule, the 'Starting Time' field indicates a start point of a first ULW, the 'Duration' field indicates duration time of each ULW, the 'Period' field indicates a time interval between consecutive ULWs, the 'Count Down' field indicates the number of indicated ULWs, the 'ULW Overwrite' field indicates whether an unaligned schedule takes precedence over NAN availability attributes, the 'ULW Control' field indicates whether a NAN device is available during all ULWs, and the 'Band ID or Channel Entry' field includes a band ID or channel entry related to a corresponding LTLW.

Meanwhile, a tree of main fields of the unaligned schedule attribute is shown in [Table 8] below.

**[Table 8]**

| | | | |
|---|---|---|---|
| | Unaligned Schedule attribute | | |
| | | - Control | |
| | | | - Channel Availability |
| | | - Starting Time | |
| | | - Duration | |
| | | - Period | |
| | | - Band ID or Channel Entry | |
| | | | - List of Band Entries |
| | | | - Channel Entry |

In Table 8, a control field may be a field used to determine whether to use a channel or band for the unaligned schedule attribute, and may include a channel availability field. In an embodiment, the Channel Availability field may indicate that a NAN device is available for unaligned schedule attributes on a channel specified in the next channel entry field (for example, if a field value of the Channel Availability field is set to "0"), or may indicate that the NAN device may not be available in band or channels specified in the next band ID field or channel entry field (for example, if a field value of the Channel Availability field is set to "1"). For example, the Channel Availability field may be used to indicate whether a ULW may be used in a channel or band configured with an FWA.

In Table 8, a starting time field may indicate starting time of a first indicated ULW represented by the lower 4 bytes of a NAN time synchronization function (TSF). For example, the starting time field may indicate time at which a ULW starts (based on 1TU of the NAN TSF). In Table 8, a duration field may indicate a duration of the ULW, and may indicate a period of each ULW in units of milliseconds. In Table 8, a period field may indicate time between consecutive ULWs in units of milliseconds.

In Table 8, a band ID or channel entry may indicate a band ID or channel entry, and may include a list of band entries field and a channel entry field. The List of Band Entries field is as described in Table 4 and the Channel Entry field is as described in Table 5, so a detailed description thereof will be omitted herein.

Meanwhile, in addition to configuring FAWs by NAN availability attributes, ULWs may be additionally configured by unaligned schedule attributes.

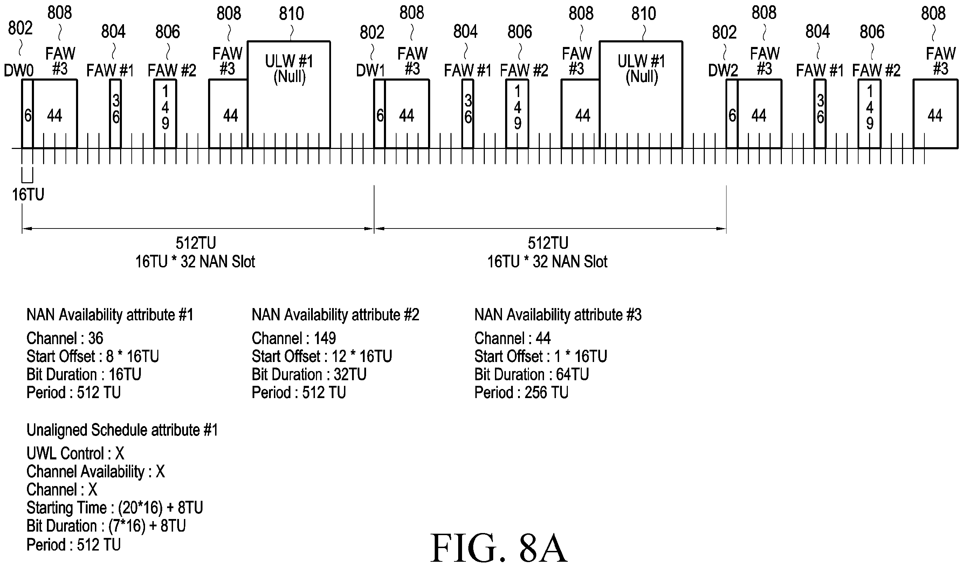

FIGS. 8A to 8C are diagrams schematically illustrating examples of FAWs configured based on NAN availability attributes and ULWs configured based on unaligned schedule attributes according to various embodiments.

In FIGS. 8A to 8C, an FAW #1 804, an FAW #2 806, and an FAW #3 808 set in a time duration between DWs 802, 812, and 822 are as described in FIG. 7D. As shown in FIGS. 8A to 8C, the FAW #1 804, the FAW #2 806, and the FAW #3 808 may be configured in units of time slots consisting of 16 TUs.

For example, the FAW #1 804 is an FAW which is configured if a channel 36 is indicated through a Channel Entry field of a Band/Channel Entry List of the NAN availability attribute, a duration of an FAW is indicated as 16 TUs through a Bit Duration field of a Time Bitmap Control field, a repetition duration, i.e., a period, of the FAW is indicated as 512 TUs through a Period field of the Time Bitmap Control field, and a start offset of 8 * 16TUs is indicated through a Start Offset field of the Time Bitmap Control field.

The FAW #2 806 is an FAW which is configured if a channel 149 is indicated through a Channel Entry field of a Band/Channel Entry List of the NAN availability attribute, a duration of an FAW is indicated as 32 TUs through a Bit Duration field of a Time Bitmap Control field, a repetition duration, i.e., a period, of the FAW is indicated as 512 TUs through a Period field of the Time Bitmap Control field, and a start offset of 12 * 16TUs is indicated through a Start Offset field of the Time Bitmap Control field.

The FAW #3 808 is an FAW which is configured if a channel 44 is indicated through a Channel Entry field of a Band/Channel Entry List of the NAN availability attribute, a duration of an FAW is indicated as 64 TUs through a Bit Duration field of a Time Bitmap Control field, a repetition duration, i.e., a period, of the FAW is indicated as 256 TUs through a Period field of the Time Bitmap Control field, and a start offset of 1 * 16TUs is indicated through a Start Offset field of the Time Bitmap Control field.

FIG. 8A is a diagram schematically illustrating an example of FAWs configured based on NAN availability attributes and unaligned windows (ULWs) configured based on unaligned schedule attributes according to various embodiments.

Referring to FIG. 8A, a NAN operation is supported, and a total of three FAWs, e.g., an FAW #1 804, an FAW #2 806, and an FAW #3 808 and one ULW, e.g., a ULW # 1 810 are configured. The FAW #1 804, the FAW #2 806, and the FAW #3 808 have been specifically described above, so detailed descriptions thereof will be omitted herein.

The ULW #1 810 may be configured by an unaligned schedule attribute #1 which is an unaligned schedule attribute in which there is no a UWL control field, a channel availability field, and a channel field, a Starting Time field is indicated as (16 * 20) + 8 TUs, a Bit Duration field is indicated as (7 * 16) + 8 TUs, and a Period field is set to 512 TUs.

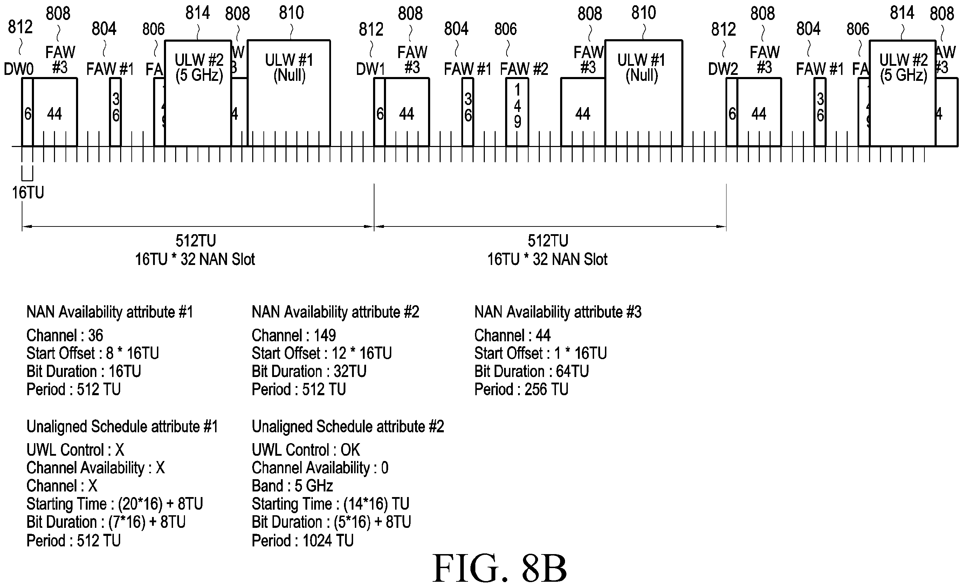

FIG. 8B is a diagram schematically illustrating another example of FAWs configured based on NAN availability attributes and ULWs configured based on unaligned schedule attributes according to various embodiments.

Referring to FIG. 8B, a NAN operation is supported, and a total of three FAWs, e.g., an FAW #1 804, an FAW #2 806, and an FAW #3 808 and a total of two ULWs, e.g., a ULW # 1 810 and a ULW #2 814 are configured. The FAW #1 804, the FAW #2 806, and the FAW #3 808 have been specifically described above, so detailed descriptions thereof will be omitted herein.

The ULW #1 810 may be configured by an unaligned schedule attribute #1 which is an unaligned schedule attribute in which there is no a UWL control field, a channel availability field, and a channel field, a Starting Time field is indicated as (16 * 20) + 8 TUs, a Bit Duration field is indicated as (7 * 16) + 8 TUs, and a Period field is set to 512 TUs. In an embodiment, the ULW #2 814 may be configured by an unaligned schedule attribute #2 which is an unaligned schedule attribute in which there are a UWL control field and a channel availability field, a channel field indicates 5 GHz, a Starting Time field is indicated as (16 * 14) TUs, a Bit Duration field is indicated as (5 * 16) + 8 TUs, and a Period field is set to 1024 TUs.

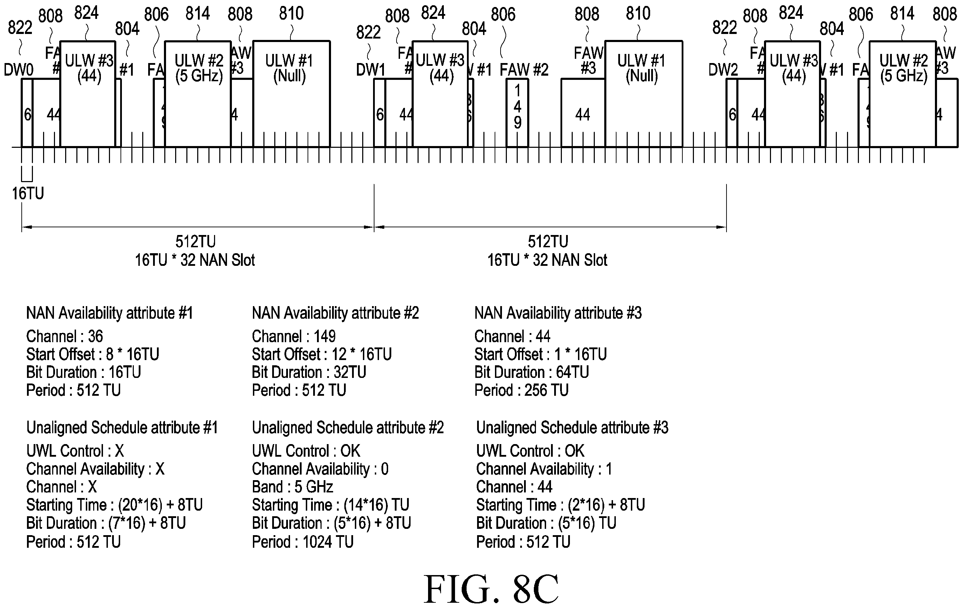

FIG. 8C is a diagram schematically illustrating another example of FAWs configured based on NAN availability attributes and ULWs configured based on unaligned schedule attributes according to various embodiments.

Referring to FIG. 8C, a NAN operation is supported, and a total of three FAWs, e.g., an FAW #1 804, an FAW #2 806, and an FAW #3 808 and a total of three ULWs, e.g., a ULW # 1 810, a ULW #2 814, and a ULW #3 824 are configured. The FAW #1 804, the FAW #2 806, and the FAW #3 808 have been specifically described above, so detailed descriptions thereof will be omitted herein.

The ULW #1 810 may be configured by an unaligned schedule attribute #1 which is an unaligned schedule attribute in which there is no a UWL control field, a channel availability field, and a channel field, a Starting Time field is indicated as (16 * 20) + 8 TUs, a Bit Duration field is indicated as (7 * 16) + 8 ms, and a Period field is set to 512 TUs. In an embodiment, the ULW #2 814 may be configured by an unaligned schedule attribute #2 which is an unaligned schedule attribute in which there are a UWL control field and a channel availability field, a channel field indicates 5 GHz, a Starting Time field is indicated as (16 * 14) TUs, a Bit Duration field is indicated as (5 * 16) + 8 TUs, and a Period field is set to 1024 TUs. In an embodiment, the ULW #3 824 may be configured by an unaligned schedule attribute #3 which is an unaligned schedule attribute in which there are a UWL control field and a channel availability field, a channel field indicates a channel number 44, a Starting Time field is indicated as (16 * 14) TUs, a Bit Duration field is indicated as (5 * 16) TUs, and a Period field is set to 512 TUs.

Schedule setup and update will be described.

According to various embodiments, a NAN device may configure various combinations of FAWs and ULWs based on one or more NAN availability attributes and one or more unaligned schedule attributes as described above, and set up and update a schedule including various combinations of FAWs and ULWs. As described above, NAN devices may configure FAWs and ULWs for a NAN operation and a non-NAN operation based on NAN availability attributes and unaligned schedule attributes transferred through management frames.

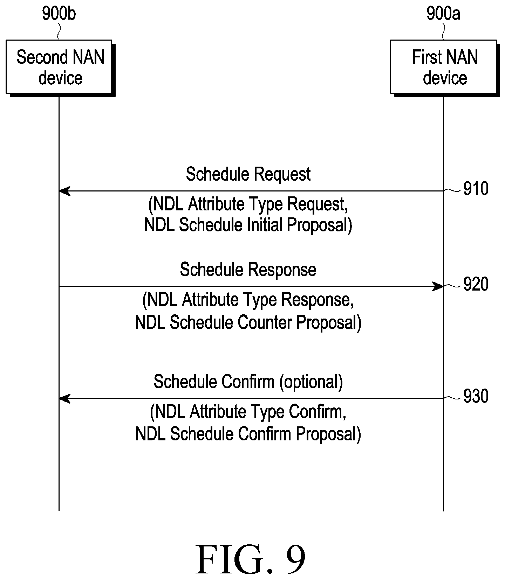

FIG. 9 is a signal flow diagram schematically illustrating an NDL schedule setup handshake operation having an NDL schedule counter proposal according to various embodiments.

Referring to FIG. 9, an illustrated signal flow diagram is a signal flow diagram illustrating a handshake operation for NDL setup and update. In an embodiment, a first NAN device 900a which intends to establish a NAN data path may operate as an NDL schedule initiator, and a second NAN device 900b may operate as an NDL schedule responder.

In operation 910, the first NAN device 900a (e.g., an electronic device 101) may transmit a schedule request frame to the second NAN device 900b (e.g., an electronic device 102) which is an external electronic device. In an embodiment, the schedule request frame may be an NAF indicating an initiation request for a NAN operation, for example, a further service discovery NAN operation. In an embodiment, the schedule request frame may include an NDL attribute type request indicating an NDL attribute type of a request, and an NDL schedule initial proposal including a NAN availability attribute and an unaligned schedule attribute. In an embodiment, the NDL schedule initial proposal may indicate conditional or committed FAWs.

When receiving the schedule request frame from the first NAN device 900a, the second NAN device 900b may determine one of accepted status, counter status, or rejected status based on the NDL schedule initial proposal.

First, the accepted status may represent status in which it is appropriate to configure an NDL schedule based on an NDL schedule initial proposal. In this case, the second NAN device 900b may transmit a schedule response frame including a final NDL schedule compliant proposal to the first NAN device 900a. According to an embodiment, when receiving the final NDL schedule compliant proposal, the first NAN device 900a may not transmit a schedule confirm frame to the second NAN device 900b (not separately shown in FIG. 9). In an embodiment, the schedule response frame may be an NAF indicating an initiation response for a NAN operation, e.g., a further service discovery NAN operation, and the schedule response frame may include an NDL attribute type response indicating an NDL attribute type of a response.

Second, the counter status may represent status in which an NDL schedule is reconfigured based on an NDL schedule initial proposal. In this case, in operation 920, the second NAN device 900b may transmit, to the first NAN device 900a, a schedule response frame including an NDL schedule counter proposal corresponding to the NDL schedule reconfigured based on the NDL schedule initial proposal. In operation 930, when receiving the NDL schedule counter proposal, the first NAN device 900a may transmit a schedule confirm frame to the second NAN device 900b. In an embodiment, the schedule confirm frame may include an NDL attribute type confirm indicating an NDL attribute type of confirm and an NDL schedule confirm proposal. The NDL schedule confirm proposal may include one or more NAN availability attributes having one or more committed availability entries, and may indicate committed FAWs.

Thirdly, the rejected status may represent a case in which an NDL schedule initial proposal is invalid or the NDL schedule initial proposal conflicts with an NDL schedule proposed by the second NAN device 900b. In this case, the second NAN device 900b may negotiate a schedule by rejecting the NDL schedule initial proposal and proposing a new NDL schedule (not separately shown in FIG. 9).

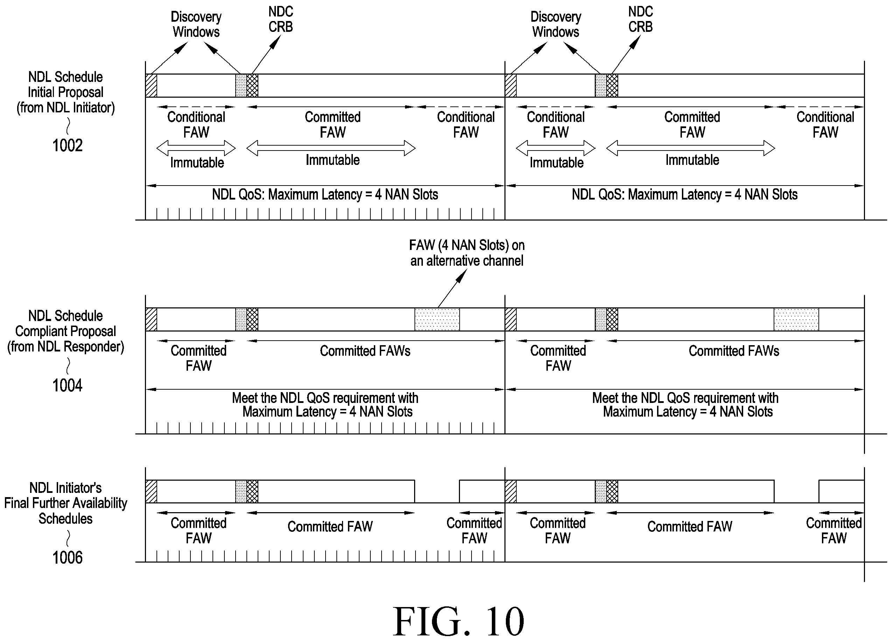

FIG. 10 is a diagram schematically illustrating an NDL schedule initial proposal and an NDL schedule compliant proposal of an NDL schedule setup handshake operation according to various embodiments.

Referring to FIG. 10, an NDL schedule initiator in an NDL schedule initial proposal 1002 may indicate time periods which are 'committed' or "conditional' FAWs. An NDL schedule responder in an NDL schedule compliant proposal 1004 may indicate time periods which are 'committed' or "conditional' FAWs. The NDL schedule initiator and the NDL schedule responder may determine a further availability schedule 1006 including finally 'committed' FAWs based on the NDL schedule initial proposal 1002 and the NDL schedule compliant proposal 1004.

For example, FIG. 10 may correspond to a case that an NDL schedule responder receiving a schedule request from an NDL schedule initiator determines status thereof as "accepted" based on an NDL schedule initial proposal in an NDL schedule setup handshake operation as described in FIG. 9.

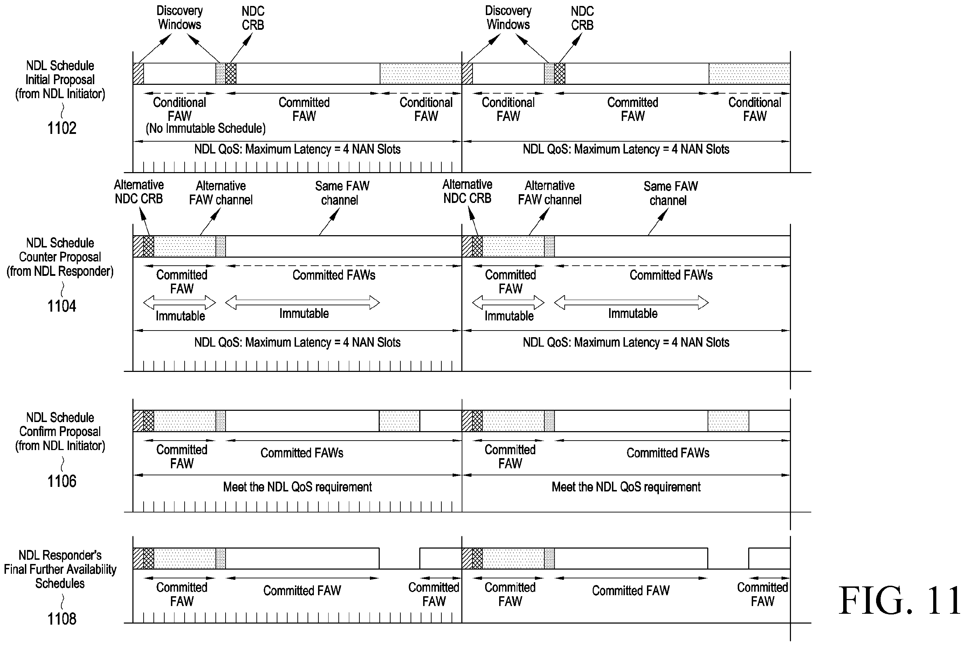

FIG. 11 is a diagram schematically illustrating an NDL schedule initial proposal, an NDL schedule counter proposal, and an NDL schedule confirm proposal of an NDL schedule setup handshake operation according to various embodiments.

Referring to FIG. 11, an NDL schedule initiator in an NDL schedule initial proposal 1102 may indicate time periods which are 'committed' or "conditional' FAWs. An NDL schedule responder may provide an NDL schedule counter proposal 1104 indicating time periods which may be 'committed' or "conditional' FAWs. In an NDL schedule confirm proposal 1106, an NDL schedule initiator may indicate time periods which may be 'committed' or 'conditional' FAWs based on the NDL schedule counter proposal 1104. The NDL schedule initiator and the NDL schedule responder may determine a further availability schedule 1108 including finally 'committed' FAWs based on the NDL schedule counter proposal 1104 and the NDL schedule confirm proposal 1106.

For example, FIG. 11 may correspond to a case that an NDL schedule responder receiving a schedule request from an NDL schedule initiator determines status thereof as "counter" based on an NDL schedule initial proposal in an NDL schedule setup handshake operation as described in FIG. 9.

Next, a NAN multicast operation in a NAN network according to various embodiments will be described.

In a NAN network, active discussions are being conducted on a multicast operation as well as a unicast operation between NAN devices. Considering such a multicast operation, a NAN multicast service group (NMSG) may be considered. By providing a shared secret key (e.g., an NMSG key) to each member of the NMSG, i.e., each NAN device included in the NMSG, each NAN device included in the NMSG may use NAN publish and subscribed functions in a security manner. In an embodiment, a NAN device included in one NMSG may be a member of other NMSGs using different NMSG keys. In an embodiment, the NAN devices included in the NMSG may have a common NAN multicast schedule and security domain. That is, the NAN devices included in the NMSG may use the same NAN multicast schedule and security domain.

In an embodiment, an originator, which is a device which configures a new NMSG and configures an attribute (e.g., a schedule and security domain) of the new NMSG, may be defined in the NAN network. The originator may advertise the new NMSG through, for example, an SDF and/or an NAF within a DW period. In an embodiment, other NAN devices included in the NAN cluster may detect existence of the new NMSG through a discovery procedure.

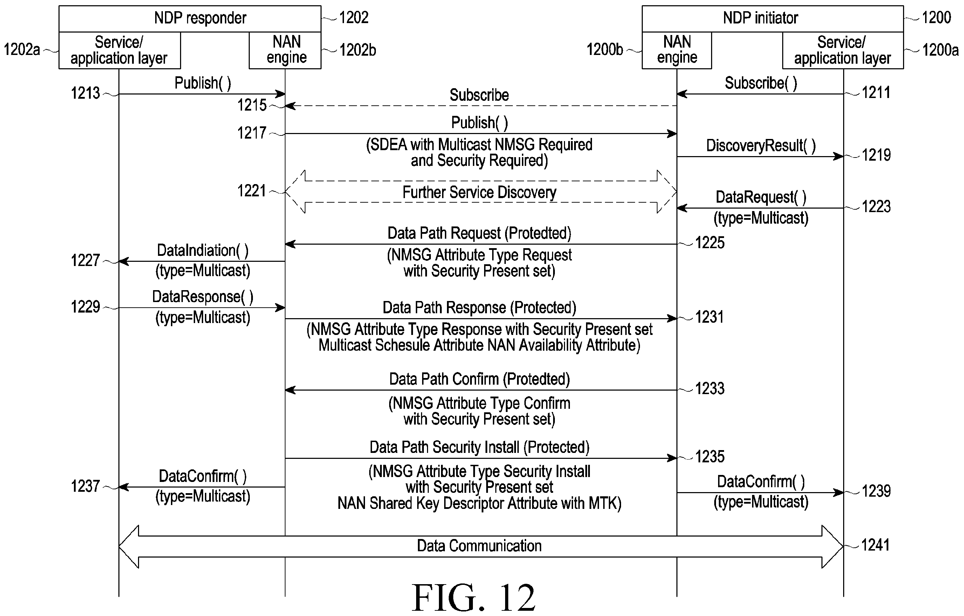

FIG. 12 is a signal flow diagram schematically illustrating an example of an NMSG enrollment operation using a 4-way handshake according to various embodiments.

Referring to FIG. 12, a first NAN device 1200 may operate as an NDP initiator, which is a device which wants to join an NMSG, and a second NAN device 1202 is an originator of the NMSG and may operate as an NDP responder. In an embodiment, the NDP initiator 1200 may be a device to be enrolled in the NMSG, and may operate as an enrolled device after being enrolled in the NMSG.

In an embodiment, the NDP initiator 1200 may include higher layers, e.g., a service/application layer 1200a and a NAN engine 1200b, and the NDP responder 1202 may include higher layers, e.g., a service/application layer 1202a and a NAN engine 1202b. In an embodiment, each of the NAN engine 1200b and the NAN engine 1202b may include, for example, a NAN discovery engine, ranging, a NAN data engine, a NAN scheduler, and/or a NAN MAC layer.

According to an embodiment, in operation 1211, the service/application layer 1200a of the NDP initiator 1200 may transfer a subscribe message to the NAN engine 1200b of the NDP initiator 1200 to search for a specific service. According to an embodiment, in operation 1213, the service/application layer 1202a of the NDP responder 1202 may transfer a publish message to the NAN engine 1202b of the NDP responder 1202 to enable other NAN devices included in the same NAN cluster to discover one or more services of the NDP responder 1202.

According to an embodiment, in operation 1215, when receiving the subscribe message, the NAN engine 1202b of the NDP initiator 1200a may transmit a subscribe message to the NDP responder 1200b. In an embodiment, the subscribe message may be transferred in service descriptor attributes transferred in an NAN SDF. In operation 1217, when receiving the subscribe message, the NAN engine 1202b of the NDP responder 1202 may transmit a publish message to the NDP initiator 1200. In an embodiment, the publish message in operation 1217 may include a service descriptor extension attribute (SDEA), the SDEA may include a control field, and the control field may include a security required field and a multicast NMSG required field.

The security required field may indicate whether security is required for an NDP associated with a corresponding service, and in FIG. 12, a field value of the security required field is set to, for example, "1", and this may indicate that the security is required for the NDP associated with the corresponding service. In an embodiment, the multicast NMSG required field may indicate whether a multicast NMSG is requested, and in FIG. 12, a field value of the multicast NMSG required field is set to, for example, "1", and this may indicate that the multicast NMSG is required.

In operation 1219, when receiving the publish message, the NAN engine 1200b of the NDP initiator 1200 may detect a discovery result for a corresponding service based on the received publish message, and transfer a discovery result message including discovery result thereof to the service/application layer 1200a of the NDP initiator 1200. In operation 1221, a further service discovery procedure may be performed between the NDP initiator 1200 and the NDP responder 1202.

In operation 1223, the service/application layer 1200a of the NDP initiator 1200 may transfer a data request message to the NAN engine 1200b of the NDP initiator 1200 to set up an NDP. In an embodiment, the data request message may include a type parameter, and the type parameter may be set to, for example, multicast (type = multicast). In operation 1225, when receiving the data request message, the NAN engine 1200b of the NDP initiator 1200 may transmit a data path request message to the NDP responder 1202. In an embodiment, the data path request message may be an initiation message for a NAN operation, e.g., an NDP setup operation, and may be transmitted through an NAF. In an embodiment, the data path request message in operation 1225 may include an NMSG attribute, a type field of the NMSG attribute may indicate "request" (NMSG attribute type: request), and a security present field of the NMSG attribute may indicate that the NMSG requires security.

In operation 1227, when receiving the data path request message, the NAN engine 1202b of the NDP responder 1202 may transfer a data indication message to the service/application layer 1202a of the NDP responder 1202. In an embodiment, the data indication message may report an NDP setup request from the NDP initiator 1200, and a type of the data indication message may be set to multicast (type = multicast). When receiving the data indication message, the service/application layer 1202a of the NDP responder 1202 may determine whether to accept the NDP setup request of the NDP initiator 1200, and transfer a data response message to the NAN engine 1202b of the NDP responder 1202 as a response message to the data indication message based on a determined result thereof in operation 1229. In an embodiment, a type of the data response message may be set to multicast (type = multicast).

In operation 1231, when receiving the data response message, the NAN engine 1202b of the NDP responder 1202 may transmit a data path response message. In an embodiment, the data path response message may be a response message for a NAN operation, e.g., an NDP setup operation, and may be transmitted through an NAF. In an embodiment, the data path response message in operation 1231 may include an NMSG attribute, a type field of the NMSG attribute may indicate "response" (NMSG attribute type: response), and a security presence field of the NMSG attribute may indicate that the NMSG requires security. In an embodiment, the data path response message in operation 1231 may include a multicast schedule attribute and a NAN availability attribute.

In operation 1233, when receiving the data path response message, the NAN engine 1200b of the NDP initiator 1200 may transmit a data path confirm message, which is a response message to the data path response message, to the NDP responder 1202. In an embodiment, the data path confirm message in operation 1233 may include an NMSG attribute, a type field of the NMSG attribute may indicate "confirm" (NMSG attribute type: confirm), and a security presence field of the NMSG attribute may indicate that the NMSG requires security.

In operation 1235, when receiving the data path confirm message, the NAN engine 1202b of the NDP responder 1202 may transmit a data path security install message to the NDP initiator 1200. In an embodiment, the data path security install message may include an NMSG attribute, a type field of the NMSG attribute may indicate "security install" (NMSG attribute type: security install), and a security presence field of the NMSG attribute may indicate that the NMSG requires security. In an embodiment, the data path security install message may include a NAN shared key descriptor attribute, and may be included in messages for NAN security setting. In an embodiment, the NAN shared key descriptor attribute may include an MTK.

According to an embodiment, in operation 1237, the NAN engine 1202b of the NDP responder 1202 may transfer a data confirm message to the service/application layer 1202a of the NDP responder 1202. In an embodiment, the data confirm message may be used to report a result of a data path setup procedure, and a type of the data confirm message may be set to multicast (type = multicast). According to an embodiment, when receiving the data path security install message, the NAN engine 1200b of the NDP initiator 1200 may transfer a data confirm message to the service/application layer 1200a of the NDP initiator 1200 in operation 1239. In an embodiment, the data confirm message may be used to report a result of a data path setup procedure, and a type of the data confirm message may be set to multicast (type = multicast).

In operation 1241, a data communication may be established between the service/application layer 1200a of the NDP initiator 1200 and the service/application layer 1202a of the NDP responder 1202.

As shown in FIG. 12, an NDP may be set up between the originator and the enrolled device, i.e., between the NDP responder 1202 and the NDP initiator 1200. However, as described in FIG. 12, there is no scheme for exchanging security-related information, e.g., a security key, between NAN devices in a NAN network, so intervention in an application or user is required to exchange the security-related information even in a procedure for setting up an NDP in the NAN network.

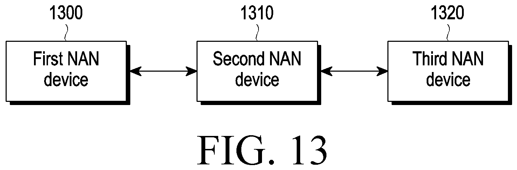

Meanwhile, enrollment of a NAN device in an NMSG may be performed not only by an originator but also by another NAN device, for example, an enrolled device, and this will be described in detail with reference to FIG. 13.

FIG. 13 is a signal flow diagram schematically illustrating another example of an NMSG enrollment operation according to various embodiments.

Referring to FIG. 13, a first NAN device 1300 may be an originator of an NMSG, and a second NAN device 1310 may be an enrolled NAN device joined to the NMSG. The second NAN device 1310 may operate as a new enroller based on an attribute of the NMSG joined by the second NAN device 1310, for example, the attribute of the NMSG such as a schedule and an MTK. When intending to join the NMSG, a third NAN device 1320 may join the NMSG through the second NAN device 1310. For example, the second NAN device 1310 may perform an enrollment procedure with the third NAN device 1320 based on an attribute of the NMSG provided from the first NAN device 1300, and then provide the third NAN device 1320 with the attribute of the NMSG provided from the first NAN device 1300 and an NMSG-ID which is an identifier (ID) of the NMSG.

Even in the NMSG enrollment operation as described in FIG. 13, not only the originator of the NMSG but also enrolled NAN devices, for example, an enrolled device which is enrolled in the NMSG through the enroller may know security-related information, e.g., an MTK, of the NMSG.

Next, a device provisioning protocol (DPP) which WFA proposes based on a Wi-Fi standard will be described.

Providing a process for easily and securely connecting a Wi-Fi device to a network may be essential for the continued growth and expansion of a Wi-Fi technology. For example, in markets such as a smart home and an Internet of Things (IoT) where there are many Wi-Fi devices which do not have a user interface or which have a user interface, but there is a limitation on the user interface, it may be more essential to provide a process for connecting a Wi-Fi device to a network simply and securely.

For example, in order to configure a network connection of a Wi-Fi device, network information and a security credential need to be provided to the Wi-Fi device. So, adding a Wi-Fi device which does not have a user interface or has a limited user interface to a network is not only cumbersome, but is performed in different ways depending on the manufacturer of the Wi-Fi device.

So, there is a need for a Wi-Fi device configuration scheme capable of connecting a Wi-Fi device to a Wi-Fi network simply and efficiently. To this end, WFA has developed a DPP technology which may simply and efficiently connect a Wi-Fi device which does not have a user interface or has a limited user interface to a Wi-Fi network.

The DPP technology may simplify configuration of the Wi-Fi device based on a standardized mechanism and directly connect the Wi-Fi device to the Wi-Fi network in a relatively easy way such as scanning a product QR code with a smartphone. For example, the DPP technology may provide improved user experience, enhanced security, and/or IoT device provisioning support while simplifying network setup and client device provisioning.

According to various embodiments, in the DPP technology, a network manager may set up an AP using a trusted device, for example, a smart phone, in a network such as a home or office, and manage network accesses of other client devices, e.g., other Wi-Fi devices. For example, the DPP is a protocol that enables to maintain a security network connection using a robust cryptographic principle while supporting a smooth user experience.

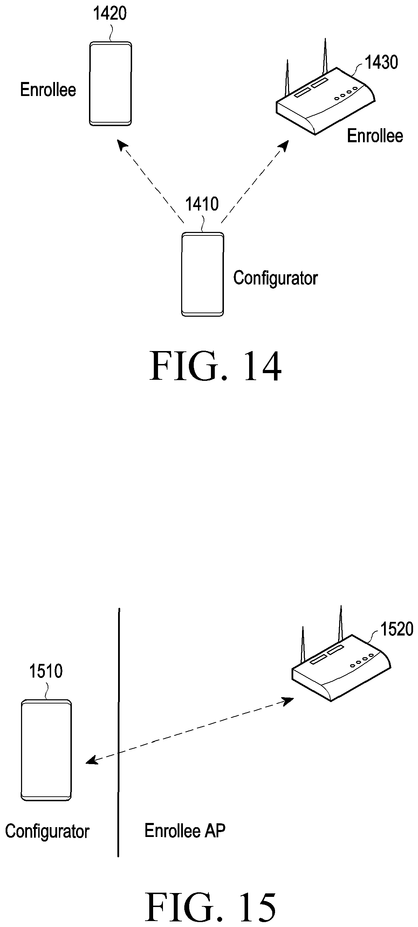

FIG. 14 is a diagram schematically illustrating an example of an architecture of a DPP network according to various embodiments.

Referring to FIG. 14, a DPP network may include devices implementing a DPP (hereinafter referred to as "DPP devices"), for example, a first DPP device 1410, a second DPP device 1420, and a third DPP device 1430. A DPP architecture may define device roles during bootstrapping, authentication, provisioning (or configuration), and connectivity (or introduction) operation, and the device roles may include two types, for example, a configurator and an enrollee, or an initiator and a responder.

The initiator may represent a DPP device which initiates a DPP authentication protocol, and one of the configurator or the enrollee may be the initiator. In one embodiment, the responder may represent a DPP device which responds to initiation of the DPP authentication protocol by the initiator, and one of the configurator or the enrollee may be the responder.

In the DPP network, the configurator may be a logical entity with capabilities to enroll and provision devices for a device-to-device (D2D) communication or an infrastructure communication.

The configurator may support setup of the enrollee. The configurator and the enrollee may be involved in a DPP bootstrapping, a DPP authentication protocol, and a DPP configuration protocol. The configurator or the enrollee may perform an initiator role in a DPP bootstrapping protocol or a DPP authentication protocol. However, only the enrollee may initiate the DPP configuration protocol and the DPP introduction protocol.

Both of the configurator and the enrollee may possess bootstrapping keys from the same elliptic curve before starting the DPP authentication protocol. In an embodiment, the elliptic curve may be an algorithm used for generating a cryptographic key, e.g., a bootstrapping key, and various algorithms as well as the elliptic curve may be used. In an embodiment, if necessary (and depending on a bootstrapping method), bootstrapping keys may be generated upon request. The DPP authentication protocol may require the initiator to obtain a bootstrapping key of the responder as part of a previous bootstrapping mechanism. Optionally, in the DPP authentication protocol, the configurator and the enrollee may obtain each other's bootstrapping keys in order to provide mutual authentication. After authentication is completed, the configurator may provision the enrollee for a device to device communication or an infrastructure communication. As part of this provisioning, the configurator may enable the enrollee to establish security associations with other external electronic devices in the DPP network.

A detailed description of a configurator and an enrollee is as follows.

Firstly, a configurator will be described.

In a DPP network, a specific DPP device, for example, a main DPP device may be designated as the configurator. The configurator as a central configuration point may provision all DPP devices included in the DPP network including an AP. One of various DPP devices included in the DPP network may be the configurator.

Secondly, an enrollee will be described.

A DPP device which a network manager of a DPP network wishes to connect to the DPP network may be the enrollee. A DPP device which is added to the DPP network, for example, an AP, a smart home appliance, a computer, a printer, or a TV may be the enrollee, and all DPP devices capable of implementing a Wi-Fi function, except for a configurator, may be the enrollee.

In FIG. 14, the first DPP device 1410 may operate as a configurator, and the second DPP device 1420 and the third DPP device 1430 may each operate as an enrollee.

FIG. 15 is a diagram schematically illustrating an example of a network configuration operation in a DPP network according to various embodiments.

Referring to FIG. 15, a configurator 1510 may provision an initial AP 1520 which is an enrollee based on a DPP. The configurator 1510 may provision client enrollees (not shown separately in FIG. 15) which are other enrollees, thereby enabling enrollees to discover and select the DPP network, and connect to the DPP network.

As shown in FIG. 15, in an initial enrollment procedure, a network manager of the DPP network may configure a mobile device as a configurator, and then configure an AP which is regarded as an enrollee through the configurator. Such AP configuration may be performed before network connection, and the DPP network may be configured through such AP configuration.

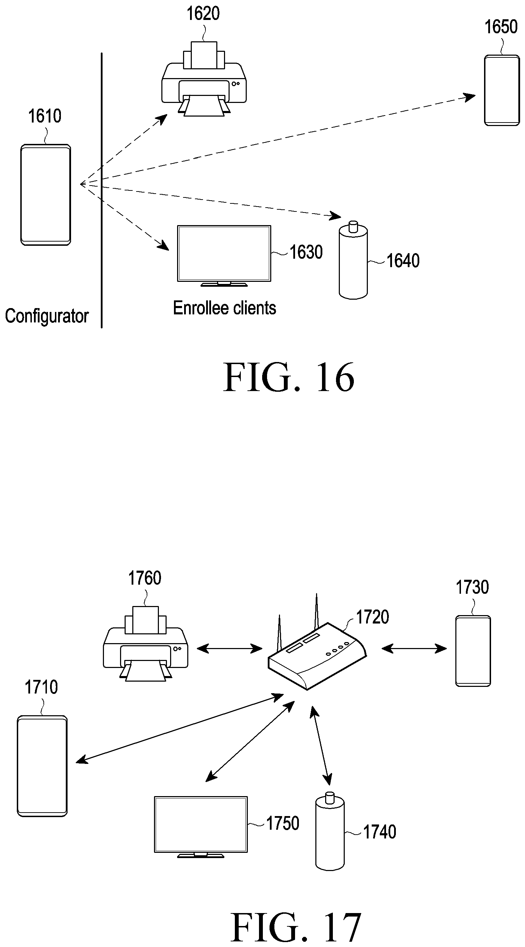

FIG. 16 is a diagram schematically illustrating an example of an enrollment operation in a DPP network according to various embodiments.

Referring to FIG. 16, after a DPP network is configured, a manager of the DPP network may initiate an enrollment procedure for enrolling DPP devices. For example, each of a client enrollee #1 1620, a client enrollee #2 1630, a client enrollee #3 1640, and a client enrollee #4 1650 may obtain configuration for a connection to a DPP network based on information provisioned by a configurator 1610. Then, the configurator 1610 may generate a separate security credential with a corresponding client enrollee, so the corresponding client enrollee may establish a connection to the DPP network. In an embodiment, the security credential may be information required to join a peer-to-peer (P2P) group.

FIG. 17 is a diagram schematically illustrating an example of a network connection operation in a DPP network according to various embodiments.

Referring to FIG. 17, after DPP devices are enrolled in a DPP network, a corresponding client enrollee may discover a DPP network through an AP 1720 based on configuration for a connection to the DPP network obtained in an enrollment procedure, and connect to the discover DPP network. In an embodiment, the AP 1720 may be connected to a configurator 1710, and an enrollee #1 1730, an enrollee #2 1740, an enrollee #3 1750, and/or an enrollee #4 1760 may discover the DPP network through the AP 1720 and connect to the discovered DPP network.

Meanwhile, WFA has developed Wi-Fi easy connect to make an operation of adding a device to a Wi-Fi network much simpler and more efficient. The Wi-Fi Easy Connect supports a bootstrapping mechanism, and the bootstrapping mechanism is a mechanism which may minimize user's work per Wi-Fi device and add securely a configurator and an enrollee to the Wi-Fi network. The Wi-Fi Easy Connect may use an enrollee QR code to support the bootstrapping mechanism. In an embodiment, the QR code may include various information such as, for example, a security key and a unique identifier of a Wi-Fi device. The QR code may be easily recognized by a Wi-Fi device having a QR code scanning function, and prevent a hassle of a user having to manually input information for Wi-Fi device authentication. Alternatively, the QR code may also prevent an issue which may occur due to a data input error.

An example of a provisioning operation using a QR code and a configurator in a Wi-Fi Easy Connect network will be described.
(1) A QR code of an enrollee is scanned by using a camera which the configurator has. The QR code may be provided in a form of a sticker or a card.
(2) The configurator may read and decrypt the QR code to automatically discover a security Wi-Fi communication link with the enrollee, and establish the security Wi-Fi communication link with the enrollee based on the discovered result.
(3) The configurator may configure Wi-Fi network information to the enrollee by using a security channel.
(4) If configuration of the Wi-Fi network information for the enrollee is completed, the enrollee may use the Wi-Fi network information provided by the configurator to discover a Wi-Fi network without intervention of a user, select a specific Wi-Fi network based on the discovered result, and perform a connection operation to the selected Wi-Fi network.

Meanwhile, in a Wi-Fi Easy Connect network, if a configurator does not have a function capable of recognizing a QR code, or if an enrollee does not have a function of displaying the QR code, it may be possible to establish a Wi-Fi communication link between the configurator and the enrollee by directly inputting a string by a user.

Meanwhile, a Wi-Fi Easy Connect technology may be designed to be flexible to provision devices in a variety of ways, and may support that a configurator or an enrollee starts a provisioning operation. As may be seen from an example of the provisioning operation as described above, a device, for example, a smart phone, which operates as the configurator may scan a QR code of a device, for example, an IoT device which operates as the enrollee, and include the QR code of the IoT device into Wi-Fi network information to be provisioned.

Unlike this, the configurator may provide the QR code of the enrollee for Wi-Fi configuration provisioning. For example, in a Wi-Fi network in a hotel, the configurator may provide the enrollee, for example, a hotel room TV with the QR code. Then, a customer may scan the QR code provided through the hotel room TV by using a smart phone, and accordingly, the provisioning operation may be performed as described above. That is, the smart phone of the customer may be on-board to a Wi-Fi network of the hotel.

A provisioning process proposed in a DPP may include a total of four operations, i.e., a bootstrapping operation, an authentication operation, a configuration operation, and an access operation. In an embodiment, the access operation may also be referred to as a peer discovery operation. In an embodiment, in three operations up to the bootstrapping operation, the authentication operation, and the configuration operation, one electronic device may operate as a configurator and an external electronic device may operate as an enrollee. In an embodiment, the configurator may perform an operation of configuring electronic devices connected to a DPP network as described above.

In an embodiment, an AP which is an enrollee may perform an operation of providing an access to a network as described above. In an embodiment, the enrollee may be a client enrollee or the AP, and if network configuration is completed, the enrollee may be connected to the AP to access the network or may operate as the AP to provide the access to the network.

A bootstrapping operation, an authentication operation, a configuration operation, and a DPP access operation will be described below.

Firstly, a bootstrapping operation will be described.

According to an embodiment, in the DPP bootstrapping operation, DPP devices may exchange public bootstrapping keys to establish a security provisioning connection. To explain this in detail, an ID is assigned to a DPP device, and a QR code or a string (a printed matter or digital) which a user may read may be included in the ID assigned to the DPP device in a form of a public key and a private key. In the bootstrapping operation, a configurator and an enrollee may establish a trusted relationship to perform mutual authentication and establish a security connection based on a result of the mutual authentication.

In one embodiment, as described above, in the bootstrapping operation, public bootstrapping keys are exchanged, and the public bootstrapping keys are transmitted in one way or exchanged bidirectionally depending on whether mutual authentication between the configurator and the enrollee is required. In the bootstrapping operation, for example, the public bootstrapping keys may be exchanged based on, for example, various schemes such as a QR code scheme, a Bluetooth scheme, a Bluetooth low energy (BLE) scheme, a near field communication (NFC) scheme, a public key exchange (PKEX) scheme, and a cloud scheme.

After the public bootstrapping keys are exchanged, a connection may be established between the configurator and the enrollee. In an embodiment, the public bootstrapping keys may be different from security credentials received by the enrollee in a configuration operation after the bootstrapping operation. In an embodiment, bootstrapping information may be used in an authentication operation and the configuration operation after the bootstrapping operation, and may include a small list of global operating class/channel pairs and a MAC address. In an embodiment, the small list of the global operating class/channel pairs may ideally include only one channel.

Secondly, an authentication operation and a configuration operation will be described.

According to an embodiment, in the authentication operation, DPP devices may establish a reliable and secure channel by using bootstrapping keys in a DPP authentication protocol, and in the configuration operation, a configurator may execute a DPP configuration protocol to provision an enrollee through a security channel established during the DPP authentication. This will be described in detail as follows.

According to an embodiment, if a bootstrapping operation is completed, the configurator and the enrollee may establish a secure Wi-Fi connection by using the DPP authentication protocol. The configurator which is an initiator in the authentication operation and the configuration operation may request authentication to the enrollee which is a responder based on channel information obtained through the bootstrapping operation. For example, the configurator may request the authentication by transmitting a DPP authentication request frame to the responder. In an embodiment, the enrollee may respond to an authentication request of the configurator while waiting on a corresponding channel based on the channel information obtained through the bootstrapping operation. For example, the enrollee may respond to the authentication request by transmitting a DPP authentication response frame to the configurator.

As the authentication operation is completed, a security connection may be established between the configurator and the enrollee, and after the security connection is established, the enrollee may start transaction for obtaining configuration from the configurator. For example, the responder may transmit a DPP configuration request frame to the configurator, and the configurator may transmit, to the responder, a DDP configuration response frame which is a response frame to the DDP configuration request frame. The responder may verify the credentials and network information obtained through the DPP configuration protocol, and transmit a result thereof to the configurator. As such a configuration operation has been completed, the enrollee may operate as an AP, or may discover a target AP, and be securely connected to the discovered target AP.

Meanwhile, encoded configuration information transmitted and received in a configuration operation may include, for example, the following DPP configuration objects.

### (1) Wi-Fi technology object

A Wi-Fi technology object may identify a Wi-Fi technology of a policy to be provisioned within an enrollee, and the Wi-Fi technology object may indicate a connection type such as an AP infra connection. For example, a Wi-Fi technology object may indicate a Wi-Fi technology to be used in a DPP authentication operation, a DPP configuration operation, and/or the like.

### (2) Discovery object

A discovery object may include, for example, operating or discovery information such as an SSID, an operating channel, and an operating band.

### (3) Credential object

A credential object may include security credential information which is provisioned by an enrollee to obtain a security network access.

Meawhile, in a DPP configuration operation, network configuration information may be transmitted from a configurator to an enrollee. In an embodiment, security credential information may include a connector, the connector may be credential information provisioned by the enrollee, and the connector may be used by a pair of enrollees to set security association by using a DPP network introduction protocol.

In an embodiment, the connector may be a credential signed by the configurator, and may be used by a client enrollee to connect to an AP enrollee. In an embodiment, the configurator may own, for example, a c-sign-key and a C-sign-key which are a signing key pair, the c-sign-key may be used by the configurator to sign connectors, and the C-sign-key may be used for provisioned DPP devices to verify connectors of other DPP devices which are signed by the same configurator.

A connector of each enrollee may include a public key, a network role, and group attribute information, and may be signed by a configurator. The public key may provide an ID of a corresponding enrollee. The network role may indicate whether the corresponding enrollee will be enrolled as a client enrollee (enrollee STA) or an AP enrollee (enrollee AP). The group attribute information may be used for detecting whether an enrollee may establish a network connection. A connector signature may prove that corresponding connector contents were generated by the configurator. A connector includes a public key rather than a password, so a security credential may be different per Wi-Fi device, i.e., per enrollee. That is, another enrollee may not access a network by using the corresponding connector, and a case that an enrollee corresponding to the corresponding connector belongs to a specific AP may mean that another AP may not impersonate the specific AP.

In an embodiment, the client enrollee may discover the AP enrollee based on network information. The client enrollee may perform an authentication operation based on a connector, and establish a network connection based on a network introduction (NI) protocol. An advantage of using the connector may be that each enrollee connected to an AP has a unique security credential.

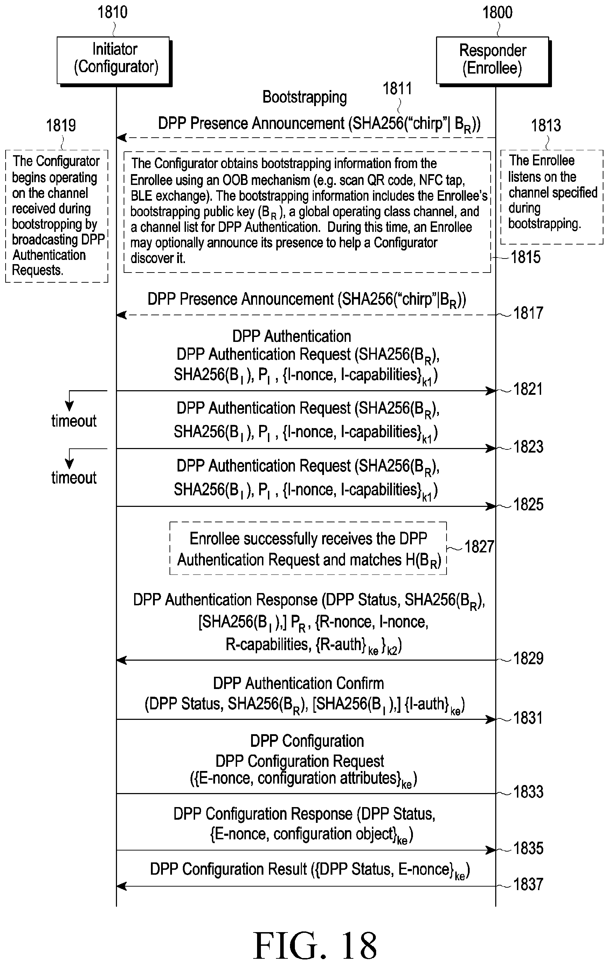

FIG. 18 is a diagram schematically illustrating an example of a provisioning process in a DPP network according to various embodiments.

Referring to FIG. 18, in operation 1811, a responder 1800 which is an enrollee may transmit a DPP presence announcement frame. In an embodiment, the DPP presence announcement frame may be used to signal, to the initiator which is the configurator, that the responder is ready to participate in DPP exchange, and may include a hash including a public bootstrapping key of a transmitter, i.e., the responder. In an embodiment, a hash for the DPP presence announcement frame to prevent leakage of a hash of a public key of a unprovisioned device may be SHA256("chirp" | B_{R}). In an embodiment, B_{R} may represent the public bootstrapping key of the responder 1800.

In operation 1813, the responder 1800 may perform a listening operation on a specified channel during the DPP bootstrapping operation. An initiator 1810 may use an out-of-band (OOB) mechanism, for example, QR code scan, NFC tap, or BLE exchange to obtain bootstrapping information from the responder 1800. In an embodiment, the bootstrapping information may include the public bootstrapping key (B_{R}) of the responder 1800, a global operating class channel, and/or a channel list for DPP authentication. During the DPP bootstrapping operation, in operation 1815, the responder 1800 may selectively announce presence of the responder 1800 to help the initiator 1810 discover the responder 1800. In an embodiment, in operation 1817, the responder 1800 may transmit a DPP presence announcement frame.

According to an embodiment, in operation 1819, the responder 1810 may begin operating on a channel based on channel information received during bootstrapping by broadcasting DPP authentication request frames. For example, the responder 1810 may continuously broadcast DPP authentication request frames in operations 1821, 1823, and 1825. In an embodiment, a DPP authentication request frame may include SHA256(B_{R}), SHA256(B_{I}), P_{I}, and {I-nonce, I-capabilities}ₖ₁. For example, SHA256(B_{R}) may represent a SHA256 hash for B_{R}, B_{I} may represent a public bootstrapping key of the responder 1810, SHA256(B_{I}) may represent a SHA256 hash for B_{I}, P_{I} may represent a public protocol key of the initiator 1810, I-nonce may represent an initiator nonce attribute, I-capabilities may represent an initiator capabilities attribute, and k1 may represent a first intermediate key.

According to an embodiment, in operation 1827, if the initiator 1810 broadcasts the DPP authentication request frames and the responder 1800 successfully receives this DPP authentication request frame, the responder 1800 may match H(B_{R}) which is a hash function value for B_{R}. In operation 1829, the responder 1800 may transmit, to the initiator 1810, a DPP authentication response frame which is a response frame to the DPP authentication request frame. In an embodiment, the DPP authentication response frame may include a DPP status field, SHA256(B_{R}), [SHA256(B_{I})], P_{R}, and {R-nonce, I-nonce, R-capabilities, I-capabilities}ₖ₂. For example, P_{R} may represent a public protocol key of the responder 1800, R-nonce may represent a responder nonce attribute, R-capabilities may represent a responder capabilities attribute, k2 may represent a second intermediary key, and [ ] may represent a value optionally present, that is, [SHA256(B_{I})] may be optionally included in the DPP authentication response frame or may be included in the DPP authentication response frame if a specific condition is satisfied.

The DPP status field may indicate status as shown in Table 9 below.

**[Table 9]**

| **Status or Error** | **Value** | **Meaning** |
|---|---|---|
| STATUS_OK | 0 | No errors or abnormal behavior |
| STATUS_NOT_COMPATIBLE | 1 | The DPP Initiator and Responder have incompatible capabilities |
| STATUS_AUTH_FAILURE | 2 | Authentication failed |
| STATUS BAD CODE | 3 | The code used in PKEX is bad |
| STATUS_SAD_GROUP | 4 | An unsupported group was offered |
| STATUS_CONFIGURE_FAILURE | 5 | Configurator refused to configure Enrollee |
| STATUS_RESPONSE_PENDING | 6 | Responder will reply later |
| STATUS_INVALID_CONNECTOR | 7 | Received Connector is invalid for some reason. The sending device needs to be reconfigured. |
| STATUS_NO_MATCH | 8 | Received Connector is verified and valid but no matching Connector could be found. The receiving device needs to be reconfigured. |
| STATUS_CONFIG_REJECTED | 9 | Enrollee rejected the configuration. |
| STATUS_NO_AP | 10 | Enrollee failed to discover an access point. |
| STATUS_CONFIGURE_PENDING | 11 | Configuration response is not ready yet. The enrollee needs to request again. |
| STATUS_CSR_NEEDED | 12 | Configuration requires a Certificate Signing Request. The enrollee needs to request again. |
| STATUS_CSR_BAD | 13 | The Certificate Signing Request was invalid. |
| STATUS_NEW_KEY_NEEDED | 14 | The Enrollee needs to generate a new Protocol key. |

In operation 1831, the initiator 1810 receiving the DPP authentication response frame from the responder 1800 may transmit a DPP authentication confirm frame to the responder 1800. In an embodiment, the DPP authentication confirm frame may include a DPP status field, SHA256(B_{R}), [SHA256(B_{I})], and {I-auth}ₖₑ. For example, I-auth may represent an authenticating tag of the initiator 1810, and ke may represent the encryption key.

In operation 1833, the responder 1800 receiving the DPP authentication confirm frame from the initiator 1810 may transmit a DPP configuration request frame to the initiator 1810. In an embodiment, the DPP configuration request frame may include {E-nonce, configRequest}ₖₑ. In an embodiment, E-nonce may represent an E-nonce attribute, and configRequest may represent a DPP configuration request object attribute. In operation 1835, the initiator 1810 receiving the DPP configuration request frame may transmit, to the responder 1800, a DPP configuration response frame which is a response to the DPP configuration request frame. In an embodiment, the DPP configuration response frame may include a DPP status field and {E-nonce, configuration object}ₖₑ.

In operation 1837, the responder 1800 receiving the DPP configuration response frame may transmit a DPP configuration result frame to the initiator 1810. In an embodiment, the DPP configuration result frame may include {DPP Status, E-nonce}ₖₑ.

Thirdly, a DPP access operation in a provisioning process will be described.

A network introduction protocol is used so that a client enrollee may be securely connected to an AP enrollee by using a connector provided by a configurator, and a DPP access operation which is based on the network introduction protocol is as follows.
(1) Each of client enrollees and the AP enrollee may identify whether a connector of each of the client enrollees and the AP enrollee is signed by the configurator.
(2) Each of the client enrollees may can identify that a role of each of the client enrollees is compatible and establish a communication with the AP enrollee.
(3) The client enrollees may identify whether group attributes are matched.
(4) Each of the AP enrollee and the client enrollees may derive a pairwise master key (PMK) based on a public connector key.
(5) A connection may be established between the AP enrollee and the client enrollees based on the derived PMK.

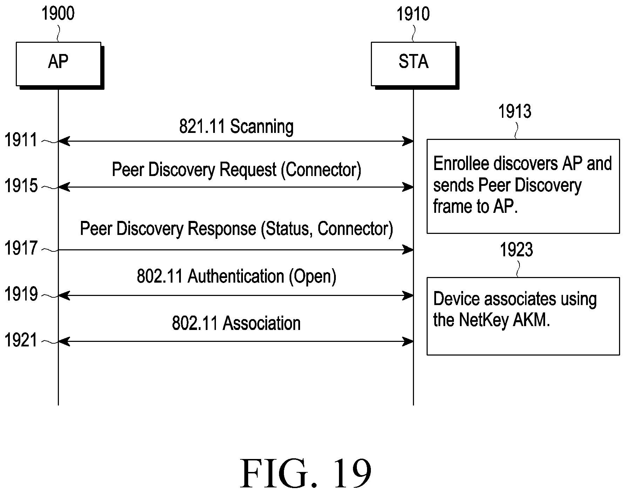

FIG. 19 is a signal flow diagram schematically illustrating a network access operation using a connector according to various embodiments.

Referring to FIG. 19, according to an embodiment, an AP 1900 may represent an AP enrollee, and an STA 1910 may represent a client enrollee. In operation 1911, the STA 1910 may perform an IEEE 802.11 scanning operation which is based on an IEEE 802.11 standard. In operation 1913, the STA 1910 may discover the AP 1900 according to performance of an IEEE 802.11 scanning operation. In operation 1915, the STA 1910 may transmit, to the AP 1900, a peer discovery request frame including a connector attribute. In operation 1917, the AP 1900 may receive the peer discovery request frame from the STA 1910, and transmit, to the STA 1910, a peer discovery response frame in response to the peer discovery request frame. In an embodiment, the peer discovery response frame may include a connector attribute and a state attribute, and the state attribute may indicate a DPP state attribute.

In operation 1919, when receiving the peer discovery response frame from the AP 1900, the STA 1910 may perform an IEEE 802.11 authentication operation which is based on the IEEE 802.11 standard with the AP 1900. In operation 1921, the STA 1910 may perform, with the AP 1900, an IEEE 802.11 association operation which is based on the IEEE 802.11 standard. In operation 1923, the STA 1910 may be associated with the AP 1900 by using an authentication and key management (AKM) which is a network key.

As described above, when setting up a data path between NAN devices, an SCID type of a PMKID type is used to configure security, and a key input procedure to input a key such as pass-phrase in a user or a higher layer, e.g., an application layer is required for using the SCID type of the PMKID type.

Such a key input procedure may require unnecessary key input from a user of a NAN device. In particular, when considering an NMSG including a plurality of NAN devices in a NAN network, intervention of a user or a higher layer, e.g., an application layer, to configure security for the plurality of NAN devices may cause considerable inconvenience.

Various embodiments of the disclosure may provide an electronic device for setting up a data path based on a provisioning procedure of a DPP in a NAN network and an operating method thereof.

Various embodiments of the disclosure may provide an electronic device for setting up a data path for an NMSG based on a provisioning procedure of a DPP in a NAN network and an operating method thereof.

Various embodiments of the disclosure may provide an electronic device for setting up a data path for a plurality of unicast groups based on a provisioning procedure of a DPP in a NAN network and an operating method thereof.

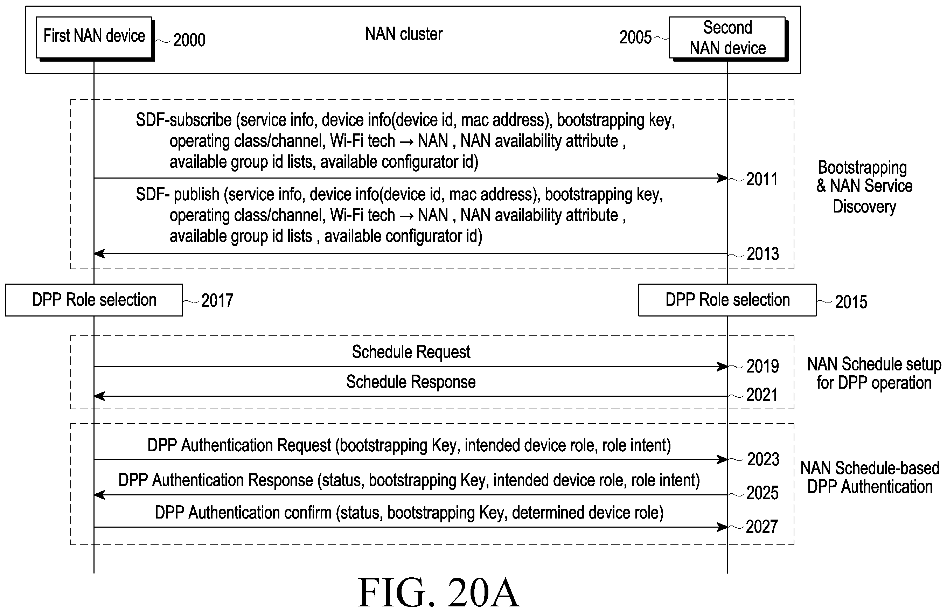

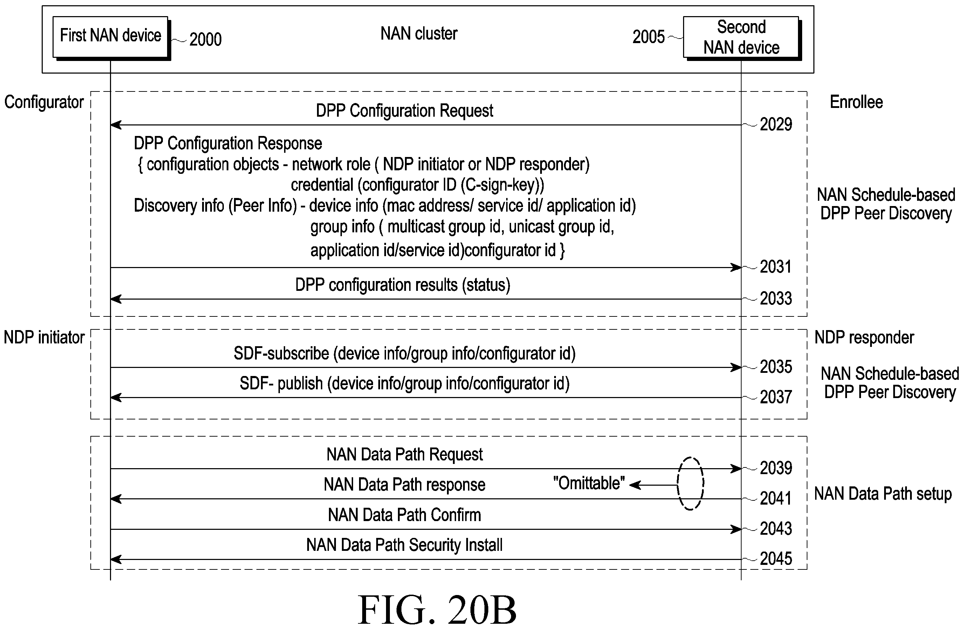

FIGS. 20A and 20B are signal flow diagrams schematically illustrating an example of an operation of setting up a secure data path based on a DPP in a NAN network according to various embodiments.

Referring to FIGS. 20A and 20B, a first NAN device 2000 and a second NAN device 2005 according to an embodiment may be included in the same NAN cluster, and the first NAN device 2000 may operate as an initiator, and the second NAN device 2005 may operate as a responder.

In operation 2011, the first NAN device 2000 may transmit a subscribe message through an SDF in a DW to set up a secure data path. In an embodiment, the subscribe message may include at least one of service info, device info (e.g., a device ID (device id) and a MAC address (mac address)), a bootstrapping key, an operating class/channel, Wi-Fi technology (Wi-Fi tech) set to a NAN (Wi-Fi tech -> NAN), a NAN availability attribute, available group ID lists (available group id lists), or an available configurator ID (available configurator id).

In operation 2013, the second NAN device 2005 may transmit a publish message through the SDF in the DW. In an embodiment, the publish message may include at least one of service information, device information (e.g., a device ID and a MAC address), a bootstrapping key, an operating class/channel, a Wi-Fi technology set to a NAN (Wi-Fi tech -> NAN), a NAN availability attribute, available group ID lists, or an available configurator ID. In an embodiment, at least one of an operation of transmitting and receiving a subscribe message or an operation of transmitting and receiving a publish message before a schedule is set up may be included in a service discovery operation. In an embodiment, a bootstrapping key may be included in at least one of the subscribe message or the public message as first security information.

In an embodiment, the service discovery operation may include an operation in which the first NAN device 2000 transmits the subscribe message, thereby allowing the second NAN device 2005 to discover the first NAN device 2000 which transmits the subscribe message. In an embodiment, the second NAN device 2005 which receives the subscribe message may discover the first NAN device 2000 based on the bootstrapping key included in the subscribe message transmitted by the first NAN device 2000. In an embodiment, the second NAN device 2005 may discover the first NAN device 2000 which transmits the subscribe message including the bootstrapping key identical to the bootstrapping key possessed by the second NAN device 2005 itself.

In an embodiment, the service discovery operation may include an operation in which the second NAN device 2000 transmits the publish message, thereby allowing the first NAN device 2000 to discover the second NAN device 2005 which transmits the publish message. In an embodiment, the first NAN device 2000 which receives the publish message may discover the second NAN device 2005 based on the bootstrapping key included in the publish message transmitted by the second NAN device 2005. In an embodiment, the first NAN device 2000 may discover the second NAN device 2005 which transmits the publish message including the bootstrapping key identical to the bootstrapping key possessed by the first NAN device 2000 itself.

In each of the subscribe message and the publish message, the service information may include at least one of, for example, a service protocol type or service specific information, the bootstrapping key may be a public bootstrapping key to be used in at least one of a DPP authentication operation or a DPP configuration operation, and the operating class/channel may indicate an operating/class channel on which the DPP authentication operation is to be performed. In an embodiment, the bootstrapping key, which is the first security information, may be used in at least one of the DPP authentication operation and the DPP configuration operation. In an embodiment, the DPP authentication operation or the DPP configuration operation may be performed based on the first security information.

In an embodiment, at least one of the DPP authentication operation or the DPP configuration operation may be performed based on a NAN technology, so a Wi-Fi technology may be set to a NAN in each of the subscribe message and the publish message. In an embodiment, at least one of the DPP authentication operation, the DPP configuration operation, or a DPP access operation is performed based on a NAN schedule, so a NAN availability attribute may be included in each of the subscribe message and the publish message. In each of the subscribe message and the publish message, the available group ID lists may include an ID of a corresponding NMSG or unicast data group if a corresponding NAN device may be included in the NMSG or unicast data group.

In operation 2015, the second NAN device 2005 may determine a device role of the second NAN device 2005. In an embodiment, the device role may be a device role in a network, for example, a network in which the first NAN device 2000 and the second NAN device 2005 are included. In an embodiment, the device role may be any one of a configurator or an enrollee. In an embodiment, it will be assumed that the second NAN device 2005 determined the device role of the second NAN device 2005 as the enrollee.

In operation 2017, the first NAN device 2000 may determine a device role of the first NAN device 2000. In an embodiment, it will be assumed that the first NAN device 2000 determined the device role of the first NAN device 2000 as the configurator. For example, the first NAN device 2000 may determine the role of the first NAN device 2000 itself as the configurator in the following cases.
(1) If the first NAN device 2000 is an originator which configures a new NMSG and an attribute (e.g., a schedule and a security domain) of the new NMSG, a key generated by the first NAN device 2000 is used in the corresponding NMSG, so the first NAN device 2000 may determine the device role of the first NAN device 2000 as the configurator.
(2) If the first NAN device 2000 is enrolled in a specific NMSG, that is, the first NAN device 2000 is an enrolled device for the specific NMSG, and operates as a new enroller for another NAN device based on an attribute of the specific NMSG, the first NAN device 2000 may determine the device role of the first NAN device 2000 as the configurator.
(3) If first NAN device 2000 is performing a unicast data group communication with another NAN device as well as an NMSG, a key used in a data path for the unicast data group communication may be used for the other NAN device, i.e., a currently discovered NAN device, and in this case, the first NAN device 2000 may determine the device role of the first NAN device 2000 as the configurator. For example, if the first NAN device 2000 is performing the unicast data group communication with the other NAN device, the first NAN device 2000 may determine the device role of the first NAN device 2000 as the configurator when intending to reuse security information used in the data path for the corresponding unicast data group communication.

Meanwhile, in addition to the first NAN device 2000, the second NAN device 2005 may determine its own device role as a configurator. In preparation for such a case, each of the first NAN device 2000 and the second NAN device 2005 may generate an arbitrary role intent value, and determine a device role thereof by exchanging the corresponding role intent value when exchanging capability information thereof later in a DPP authentication operation. An operation of determining a device role based on a role intent value will be described in detail below, so a detailed description thereof will be omitted herein.

In FIGS. 20A and 20B, at least one of a DPP authentication operation, a DPP configuration operation, or a DPP access operation between the first NAN device 2000 and the second NAN device 2005 may be performed based on the NAN schedule. The first NAN device 2000 and the second NAN device 2005 may set up the NAN schedule for performing the at least one of the DPP authentication operation, the DPP configuration operation, or the DPP access operation. In operation 2019, the first NAN device 2000 may transmit a schedule request frame to the second NAN device 2005. The schedule request frame may include an NDL attribute type request indicating an NDL attribute type of a request, or an NDL schedule initial proposal including a NAN availability attribute and a unaligned schedule attribute. In an embodiment, the NDL schedule initial proposal may indicate conditional or committed FAWs.

When receiving the schedule request frame from the first NAN device 2000, the second NAN device 2005 may determine one of accepted status, counter status, or rejected status based on the NDL schedule initial proposal. In FIG. 20A, it will be assumed that the second NAN device 2005 determined the accepted status.

The accepted status, the counter status, and the rejected status will be described as follows.

First, the accepted status may represent status in which it is appropriate to configure an NDL schedule based on an NDL schedule initial proposal. In this case, in operation 2021, the second NAN device 2005 may transmit a schedule response frame including a final NDL schedule compliant proposal to the first NAN device 2000. According to an embodiment, when receiving the final NDL schedule compliant proposal, the first NAN device 2000 may not transmit a schedule confirm frame to the second NAN device 2005. In an embodiment, the schedule response frame may include an NDL attribute type response indicating an NDL attribute type of a response.

Second, the counter status may represent status in which an NDL schedule is reconfigured based on an NDL schedule initial proposal. In this case, the second NAN device 2005 may transmit, to the first NAN device 2000, a schedule response frame including an NDL schedule counter proposal corresponding to the NDL schedule reconfigured based on the NDL schedule initial proposal, or the first NAN device 2000 receiving the NDL schedule counter proposal may transmit a schedule confirm frame to the second NAN device 2005 (not separately shown in FIG. 20A). In an embodiment, the schedule confirm frame may include at least one of an NDL attribute type confirm indicating an NDL attribute type of confirm, or an NDL schedule confirm proposal. The NDL schedule confirm proposal may include one or more NAN availability attributes having one or more committed availability entries, and may indicate committed FAWs.

Thirdly, the rejected status may represent a case in which an NDL schedule initial proposal is invalid or the NDL schedule initial proposal conflicts with an NDL schedule proposed by the second NAN device 2005. In this case, the NAN device #2 2005 may negotiate a schedule by rejecting the NDL schedule initial proposal and proposing a new NDL schedule (not separately shown in FIG. 20A).

A NAN schedule may be set up through a NAN schedule setup operation including operations 2019 and 2021, and at least one of the DPP authentication operation, the DPP configuration operation, or the DPP access operation may be performed through the set-up NAN schedule, so the at least one of the DPP authentication operation, the DPP configuration operation, and the DPP access operation may be performed more quickly and with a higher success probability.

In an embodiment, the set-up NAN schedule may be used as a data path schedule for a data path as well as for performing the at least one of the DPP authentication operation, the DPP configuration operation, or the DPP access operation. The at least one of the DPP authentication operation, the DPP configuration operation, or the DPP access operation to be described later may be performed based on the NAN schedule set up through the NAN schedule setup operation.

After the NAN schedule is set up in this way, the first NAN device 2000 may transmit a DPP authentication request frame to the second NAN device 2005 in operation 2023. In an embodiment, the DPP authentication request frame may include at least one of a bootstrapping key, an intended device role, or a role intent. It has been assumed that the first NAN device 2000 determined the device role thereof as the configurator in operation 2017, so the intended device role may indicate the configurator and the role intent may indicate a determined role intent value. In an embodiment, a bootstrapping key, which is first security information, may also be used in the DPP authentication operation. In an embodiment, the DPP authentication operation may be performed based on the first security information.

In operation 2025, the second NAN device 2005 may receive the DPP authentication request frame, perform an authentication operation based on the received DPP authentication request frame, and transmit a DPP authentication response frame which is a response frame to the DPP authentication request frame based on a result of performing the authentication operation. In an embodiment, the second NAN device 2005 may determine whether the authentication operation has succeeded based on whether the bootstrapping key received from the first NAN device 2000 matches a bootstrapping key of the second NAN device 2005. In an embodiment, the DPP authentication response frame may include at least one of a DPP status field, a bootstrapping key, an intended device role, or a role intent. In an embodiment, the DPP status field may be as described in Table 9, so a detailed description thereof will be omitted.

It has been assumed that the second NAN device 2005 determined the device role thereof as the enrollee in operation 2015, so the intended device role may indicate the enrollee and the role intent may indicate a determined role intent value. Alternatively, it will be assumed that the authentication operation is successful in operation 2025, so the DPP status field in the DPP authentication response frame may indicate STATUS_OK indicating that there is no error and abnormal operation.

If the device role of the second NAN device 2005 is determined to be the same as that of the first NAN device 2000 as the configurator in operation 2015, the intended device role in the DPP authentication response frame in operation 2025 may also indicate the configurator, and the role intent may indicate a determined role intent value. In this case, a NAN device having a larger role intent value among the role intent value of the first NAN device 2000 and the role intent value of the second NAN device 2005 may become a configurator.

In an embodiment, the first NAN device 2000 may receive the DPP authentication response frame. The intended device role in the DPP authentication response frame is described as the enrollee, so the first NAN device 2000 may determine the device role of the first NAN device 2000 as the configurator as it is. In operation 2027, the first NAN device 2000 may transmit a DPP authentication confirm frame to the second NAN device 2005 in response to the received DPP authentication response frame. In an embodiment, the DPP authentication confirm frame may include at least one of a DPP Status field, a bootstrapping key, or a determined device role, and the determined device role may indicate a determined device role, e.g., the configurator, for the first NAN device 2000.

The DPP authentication operation as described above may be performed in a form of mutual authentication if NAN devices related to the DPP authentication operation acquire each other's bootstrapping key. The DPP authentication operation as described above, as needed, may be performed in a form of authenticating only a NAN device transmitting connection request in a device receiving the connection request, or may be performed in a form of authenticating only a NAN device receiving a connection request in a NAN device transmitting the connection request. The DPP authentication operation may be implemented in various forms depending on whether the mutual authentication is required.

As the DPP authentication confirm frame is transmitted in this way, the DPP authentication operation may be completed between the first NAN device 2000 and the second NAN device 2005, and then the first NAN device 2000 may operate as the configurator, and the second NAN device 2005 may operate as the enrollee.

In operation 2029, the second NAN device 2005 may transmit a DPP configuration request frame to the first NAN device 2000. In an embodiment, the DPP configuration request frame may be a first message requesting network configuration information. In an embodiment, the network configuration information may represent information related to configuration of a network, and may include at least one of configuration objects or discovery information. In operation 2031, the first NAN device 2000 may receive the DPP configuration request frame and transmit a DPP configuration response frame, which is a response frame to the DPP configuration request frame, to the second NAN device 2005.

In an embodiment, the DPP configuration response frame may be a response frame to the DPP configuration request frame, and may include network configuration information. In an embodiment, the DPP configuration response frame may be a second message including the network configuration information. The DPP configuration response frame may include the network configuration information, for example, at least one of configuration objects or discovery information. The configuration objects may include, for example, at least one of a network role (e.g., an NDP initiator or an NDP responder) or credential information (configurator ID (C-sign-key)). In an embodiment, the credential information included in the DPP configuration response frame may be second security information used to set up a data path between the first NAN device 2000 and the second NAN device 2005. In an embodiment, the discovery information (peer information) may include, for example, at least one of device information (e.g., a MAC address, a service ID, or an application ID), group information (e.g., a multicast group ID, a unicast group ID, an application ID, or a service ID), or a configurator ID. In an embodiment, the discovery information included in the network configuration information may be used in a peer discovery operation.

A Network role included in a DPP configuration response frame will be described in detail as follows.

In a general DPP technology, only network roles of a client enrollee (enrollee STA) and an AP enrollee (enrollee AP) are specified in a DPP configuration operation. In the general DPP technology, only network roles considering only an AP connection are specified in the DPP configuration operation.

In the disclosure, network roles, i.e., an NDP initiator and an NDP responder, for data path setup as well as existing network roles, i.e., a client enrollee and an AP enrollee, may be additionally specified in the DPP configuration operation. In the disclosure, network roles, i.e., the NDP initiator and the NDP responder, for an NDP setup procedure after the DPP configuration operation may be additionally specified. The NDP initiator may transmit a message triggering to initiate at least one of a DPP peer discovery procedure or a key install setup procedure.

Meanwhile, in the general DPP technology, only an AP connection is considered in the DPP configuration operation, so configuration objects in the DPP configuration response frame may include only an SSID of a peer device, i.e., an AP which is an external electronic device. In the disclosure, various peer devices which may use configured credential information may be considered, so peer information in the disclosure may include various pieces of information as follows.

### (1) Device information

Device information may be information about a peer device which will set up a data path with a configurator, and may include, for example, at least one of a MAC address of the peer device, a service ID which the peer device may advertise through an SDF, or an application ID.

### (2) Group information

Group information may be information about a group, i.e., a data service group, to which the peer device which will set up the data path with the configurator belongs, and may include, for example, at least one of an NMSG ID, a unicast group ID, a service ID, or an application ID.

### (3) Configurator ID

A configurator may transfer a configurator ID which may identify a process of configuring current credential information or a key issued by the configurator. In an embodiment, it will be assumed that peer devices using the same configurator ID or a key issued by the same configurator may use the same credential information. The configurator may use a different configurator ID or key each time, and may reuse a configurator ID or key as needed. The configurator ID or the key may be a configurator ID of another external configurator which is a configurator in another DPP configuration operation which is not the current configuration operation or a key issued by the external configurator.

In operation 2033, the second NAN device 2005 may receive the DPP configuration response frame and transmit a DPP configuration result frame to the first NAN device 2000. In an embodiment, the DPP configuration result frame may include DPP status.

As the DPP configuration operation has been completed, the first NAN device 2000 may operate as the NDP initiator and the second NAN device 2005 may operate as the NDP responder. In operation 2035, the first NAN device 2000 may transmit a subscribe message through an SDF. In an embodiment, the subscribe message may include discovery information, e.g., device information, group information, and/or a configurator ID which are identical to the discovery information, e.g., the device information, the group information, and/or the configurator ID.

In operation 2037, the second NAN device 2005 may receive the subscribe message and transmit a publish message through the SDF. In an embodiment, the publish message may include discovery information, e.g., device information, group information, and/or a configurator ID which are identical to the discovery information, e.g., the device information, the group information, and/or the configurator ID included in the DPP configuration response frame.

In an embodiment, at least one of an operation of transmitting and receiving a subscribe message or an operation of transmitting and receiving a publish message after a schedule is set up may be included in a peer discovery operation. In an embodiment, discovery information used in the peer discovery operation may be the same as discovery information included in a DPP configuration response frame. In an embodiment, the peer discovery operation may be an operation in which peers, e.g., the first NAN device 2000 and the second NAN device 2005, mutually verify each other in the set-up schedule.

In an embodiment, the peer discovery operation may include an operation in which the first NAN device 2000 transmits a subscribe message, thereby allowing the second NAN device 2005 to discover the first NAN device 2000 which transmits the subscribe message. In an embodiment, the second NAN device 2005 receiving the subscribe message may verify the first NAN device 2000 based on the discovery information included in the subscribe message transmitted by the first NAN device 2000. In an embodiment, if discovery information which the second NAN device 2005 has is identical to the discovery information included in the subscribe message transmitted by the first NAN device 2000, the second NAN device 2005 may determine that verification of the first NAN device 2000 is successful.

In an embodiment, the peer discovery operation may include an operation in which the second NAN device 2005 transmits a publish message, thereby allowing the first NAN device 2000 which receives the publish message to discover the second NAN device 2005. In an embodiment, the first NAN device 2000 receiving the publish message may verify the second NAN device 2005 based on the discovery information included in the publish message transmitted by the second NAN device 2005. In an embodiment, if discovery information which the first NAN device 2000 has is identical to the discovery information included in the publish message transmitted by the second NAN device 2005, the first NAN device 2000 may determine that verification of the second NAN device 2005 is successful. As operation 2037 has been completed, for example, as the DPP peer discovery operation has been completed, it may be possible for the first NAN device 2000 and the second NAN device 2005 to terminate the NAN schedule which is set up so that at least one of the DPP authentication operation, the DPP configuration operation, or the DPP access operation (i.e., the DPP peer discovery operation) may be performed more quickly and with a higher success probability. In an embodiment, the first NAN device 2000 and the second NAN device 2005 may maintain the NAN schedule which is set up for performing the at least one of the DPP authentication operation, the DPP configuration operation, or the DPP access operation.

A reason for maintaining the NAN schedule set up for performing the at least one of the DPP authentication operation, the DPP configuration operation, or the DPP access operation is because it is possible to set up the NDP within faster time compared to when the NDP is set up based on a NAN schedule which has already been set up rather than a DW of a NAN cluster when considering NDP schedule setup. For example, if the NDP is set up based on the NAN schedule which has already been set up, an operation of transmitting a NAN data path request message (operation 2039) and an operation of transmitting a NAN data path response message (operation 2041) which are required for NAN schedule setup between the NDP initiator and the NDP responder may be omitted, so it is possible for the NDP to be set up within faster time. In this case, an NDP setup procedure using an existing 4-way handshake may be simplified to an NDP setup procedure using a 2-way handshake. An operation of transmitting and receiving the NAN data path request message and an operation of transmitting and receiving the NAN data path response message which are required for the NAN schedule setup between the NDP initiator and the NDP responder have been described in FIG. 12, an operation of transmitting and receiving a NAN data path request message and an operation of transmitting and receiving a NAN data path response message which are performed between the first NAN device 2000 and the second NAN device 2005 will be omitted.

Of course, if the first NAN device 2000 and the second NAN device 2005 terminate the NAN schedule set up for performing the at least one of the DPP authentication operation, the DPP configuration operation, or the DPP access operation, the first NAN device 2000 and the second NAN device 2005 may perform the operation of transmitting the NAN data path request message (operation 2039) and the operation of transmitting the NAN data path response message (operation 2041) as in the existing NDP setup procedure.

According to an embodiment, in operation 2043, the first NAN device 2000 which is an NDP initiator may transmit, to the second NAN device 2005 which is an NDP responder, a NAN data path confirm message to set up a NAN data path with the second NAN device 2005 which is the NDP responder. In operation 2045, the second NAN device 2005 may receive the NAN data path confirm message, and transmit, to the first NAN device 2000, a NAN data path security install message which is a response message to the NAN data path confirm message. In an embodiment, the NAN data path security install message may be transmitted through an NAF, and may include credential information configured in the DPP configuration operation. In an embodiment, the credential information included in the NAN data path security install message may be third security information used to set up a data path between the first NAN device 2000 and the second NAN device 2005. The first NAN device 2000 detects that the credential information included in the NAN data path security install message and credential information of the first NAN device 2000 match, so the data path is finally set up between the first NAN device 2000 and the second NAN device 2000 and a data communication may be performed through the set-up data path.

The first NAN device 2000 and the second NAN device 2005 may each map and store peer information and credential information based on a configuration object.

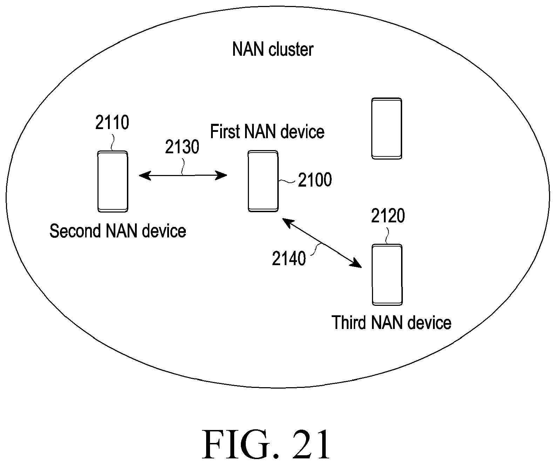

FIG. 21 is a diagram schematically illustrating an example of an NMSG enrollment operation based on a DPP in a NAN network according to various embodiments.

Referring to FIG. 21, an NMSG enrollment operation illustrated in FIG. 21 may be an NMSG enrollment operation in a case that a NAN device, i.e., an originator, which constitutes an NMGS among NAN devices included in a NAN cluster is a second NAN device 2110, a device to be enrolled in the NMGS is a first NAN device 2100, the first NAN device 2100 operates as a new enroller based on an attribute of the NMSG after being enrolled in the NMGS, and a third NAN device 2120 which is an enrollee is enrolled in the NMGS through the first NAN device 2100. In an embodiment, an operation of setting up a secure data path based on a DPP in a NAN network as described in FIGS. 20A and 20B may be simplified in a form of using a 2-way handshake, so an NMSG enrollment operation based on the DPP in the NAN network as described in FIG. 21 may also be simplified.

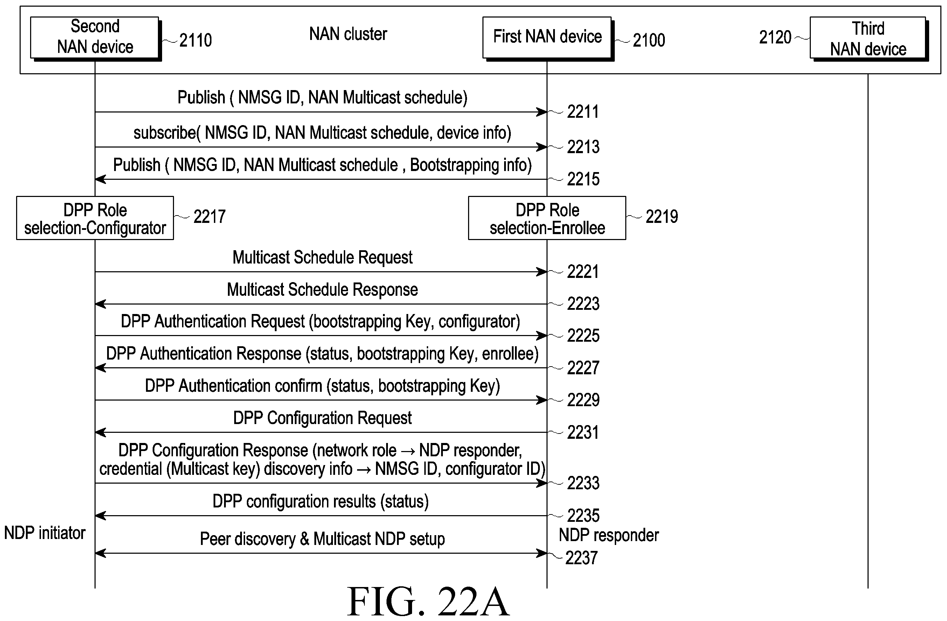

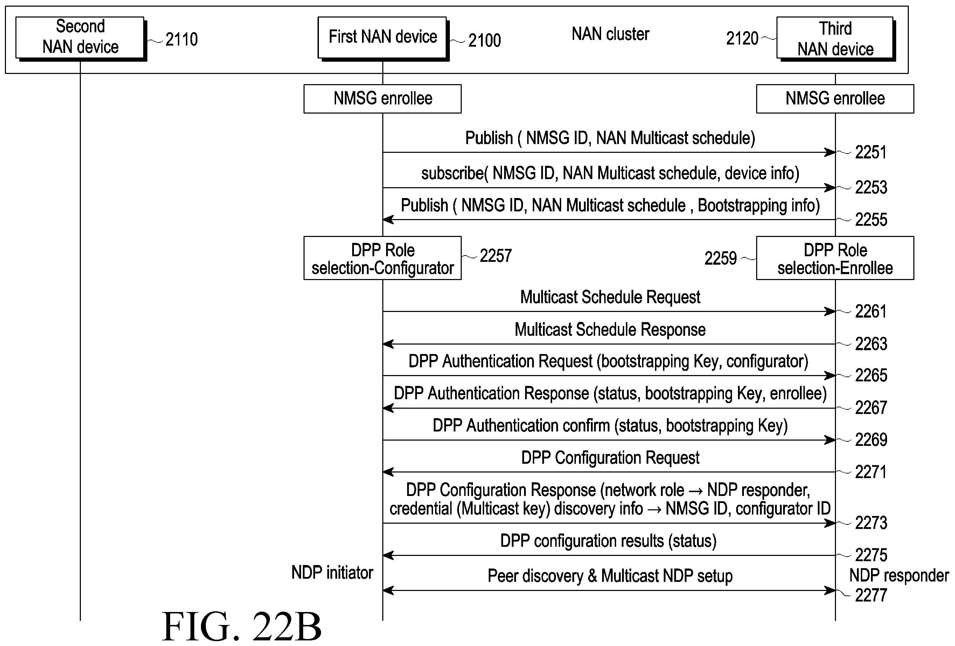

First, the second NAN device 2110 may configure a new NMSG and configure an attribute (e.g., a schedule and a security domain) of the new NMSG. Then, the second NAN device 2110 may perform an operation of setting up a secure data path as described in FIGS. 20A and 20B with the first NAN device 2100, so the first NAN device 2100 may be enrolled in the NMSG (operation 2130). The NMSG enrollment operation performed between the first NAN device 2100 and the second NAN device 2110 will be described in detail in FIGS. 22A and 22B, so a detailed description thereof will be omitted herein.

Meanwhile, after being enrolled in the NMSG, the first NAN device 2100 may operate as the new enroller based on the attribute of the NMSG. The first NAN device 2100 may perform an operation of setting up a secure data path as described in FIGS. 20A and 20B with the third NAN device 2120, so the third NAN device 2120 may be enrolled in the NMSG through the first NAN device 2100 (operation 2140). The NMSG enrollment operation performed between the first NAN device 2100 and the third NAN device 2120 will be described in detail in FIGS. 22A and 22B, so a detailed description thereof will be omitted herein.

FIGS. 22A and 22B are signal flow diagrams schematically illustrating an example of an NMSG enrollment operation based on a DPP in a NAN network according to various embodiments.

Referring to FIGS. 22A and 22B, a first NAN device 2100, a second NAN device 2110, and a third NAN device 2120 according to an embodiment may be included in the same NAN cluster. In relationship between the first NAN device 2100 and the second NAN device 2110, the second NAN device 2110 may operate as an initiator and the first NAN device 2100 may operate as a responder. In relationship between the first NAN device 2100 and the third NAN device 2120, the first NAN device 2100 may operate as an initiator and the third NAN device 2120 may operate as a responder.

In an embodiment, the second NAN device 2110 may be an originator constituting an NMGS, and the first NAN device 2100 may be a device to be enrolled in the NMSG. After being enrolled in the NMGS, the first NAN device 2100 may operate as a new enroller based on an attributes of the NMSG, and the third NAN device 2120 which is an enrollee may be enrolled in the NMGS through the first NAN device 2100. A detailed description of this is as follows.

In operation 2211, the second NAN device 2110 may transmit a publish message. The publish message in operation 2211 may include at least one of an NMSG ID which is an ID of an NMSG configured by the second NAN device 2110, or a NAN multicast schedule. In operation 2213, the second NAN device 2110 may transmit a subscribe message. The subscribe message in operation 2213 may include at least one of the NMSG ID, the NAN multicast schedule, or device information, and the device information may include, for example, at least one of a device ID (device id) or a MAC address (mac address). In operation 2215, the first NAN device 2100 may transmit a publish message. The publish message in operation 2215 may include at least one of the NMSG ID which is the ID of the NMSG configured by the second NAN device 2110, the NAN multicast schedule, or bootstrapping information, and the bootstrapping information may include a public bootstrapping key to be used in at least one of a DPP authentication operation or a DPP configuration operation.

In operation 2217, the second NAN device 2110 may determine a device role of the second NAN device 2110. In an embodiment, the device role may be any one of a configurator or an enrollee. In an embodiment, it will be assumed that the second NAN device 2110 determined the device role of the second NAN device 2110 as the enrollee. In operation 2219, the first NAN device 2100 may determine a device role of the first NAN device 2100. In an embodiment, it will be assumed that the first NAN device 2100 determined the device role of the first NAN device 2100 as the enrollee. A case that the second NAN device 2110 determines the role of the second NAN device 2110 as the configurator may be similar to a case that a first NAN device 2000 determines a role of the first NAN device 2000 as the configurator in FIGS. 20A and 20B, so a detailed description thereof will be omitted.

In FIGS. 22A and 22B, at least one of a DPP authentication operation, a DPP configuration operation, or a DPP access operation between the first NAN device 2100 and the second NAN device 2110 may be performed based on the NAN multicast schedule. The first NAN device 2100 and the second NAN device 2110 may set up the NAN multicast schedule for performing the at least one of the DPP authentication operation, the DPP configuration operation, or the DPP access operation. In operation 2221, the second NAN device 2110 may transmit a multicast schedule request frame to the first NAN device 2100. The multicast schedule request frame may include at least one of an NDL attribute type request indicating an NDL attribute type of a request, or an NDL schedule initial proposal including a NAN availability attribute and a unaligned schedule attribute. In an embodiment, the NDL schedule initial proposal may indicate conditional or committed FAWs.

When receiving the multicast schedule request frame from the second NAN device 2110, the first NAN device 2100 may determine one of accepted status, counter status, and rejected status based on the NDL schedule initial proposal. In FIGS. 22A and 22B, it will be assumed that the first NAN device 2100 determined the accepted status. The accepted status, the counter status, and the rejected status have been described in detail in FIGS. 20A and 20B, so a detailed description thereof will be omitted herein.

The first NAN device 2100 determined the accepted status, so the first NAN device 2100 may transmit a multicast schedule response frame including a final NDL schedule compliant proposal to the second NAN device 2110 in operation 2223. According to an embodiment, when receiving the final NDL schedule compliant proposal, the second NAN device 2110 may not transmit a multicast schedule confirm frame to the first NAN device 2100. In an embodiment, the multicast schedule response frame may include an NDL attribute type response indicating an NDL attribute type of a response.

A NAN multicast schedule may be set up through a NAN multicast schedule setup operation including operations 2221 and 2223, and at least one of the DPP authentication operation, the DPP configuration operation, or the DPP access operation may be performed through the set-up NAN multicast schedule, so the at least one of the DPP authentication operation, the DPP configuration operation, and the DPP access operation may be performed more quickly and with a higher success probability.

The set-up NAN multicast schedule may be used as a data path schedule for a data path as well as for performing the at least one of the DPP authentication operation, the DPP configuration operation, or the DPP access operation. The at least one of the DPP authentication operation, the DPP configuration operation, or the DPP access operation to be described later may be performed based on the NAN multicast schedule set up through the NAN multicast schedule setup operation.

After the NAN multicast schedule is set up in this way, the second NAN device 2110 may transmit a DPP authentication request frame to the first NAN device 2100 (operation 2225). In an embodiment, the DPP authentication request frame may include at least one of a bootstrapping key or an intended device role. It has been assumed that the second NAN device 2110 determined the device role thereof as the configurator in operation 2217, so the intended device role may indicate the configurator.

The first NAN device 2100 may receive the DPP authentication request frame, perform an authentication operation based on the received DPP authentication request frame, and transmit, to the second NAN device 2110, a DPP authentication response frame which is a response frame to the DPP authentication request frame based on a result of performing the authentication operation (operation 2227). For example, the first NAN device 2100 may determine whether the authentication operation has succeeded based on whether the bootstrapping key received from the second NAN device 2110 matches a bootstrapping key of the first NAN device 2100. In an embodiment, the DPP authentication response frame may include at least one of a DPP status field, a bootstrapping key, or an intended device role. The DPP status field may be as described in Table 9, so a detailed description thereof will be omitted.

It has been assumed that the first NAN device 2100 determined the device role thereof as the enrollee in operation 2219, so the intended device role may indicate the enrollee. Alternatively, it will be assumed that the authentication operation is successful in operation 2227, so the DPP status field in the DPP authentication response frame may indicate STATUS_OK indicating that there is no error and abnormal operation.

The second NAN device 2110 may receive the DPP authentication response frame. The intended device role in the DPP authentication response frame is described as the enrollee, so the second NAN device 2110 may determine the device role of the second NAN device 2110 as the configurator as it is. Then, the second NAN device 2110 may transmit a DPP authentication confirm frame to the first NAN device 2100 in response to the received DPP authentication response frame (operation 2229). In an embodiment, the DPP authentication confirm frame may include at least one of a DPP Status field or a bootstrapping key. The DPP authentication operation as described above may be performed in a form of mutual authentication if NAN devices related to the DPP authentication operation acquire each other's bootstrapping key. The DPP authentication operation as described above, as needed, may be performed in a form of authenticating only a NAN device transmitting connection request in a device receiving the connection request, or may be performed in a form of authenticating only a NAN device receiving a connection request in a NAN device transmitting the connection request. The DPP authentication operation may be implemented in various forms depending on whether the mutual authentication is required.

As the DPP authentication confirm frame is transmitted in this way, the DPP authentication operation may be completed between the first NAN device 2100 and the second NAN device 2110, and then the second NAN device 2110 may operate as the configurator and the first NAN device 2100 may operate as the enrollee. In operation 2231, the first NAN device 2100 may transmit a DPP configuration request frame to the second NAN device 2110. In operation 2233, the second NAN device 2110 may receive the DPP configuration request frame and transmit, to the first NAN device 2100, a DPP configuration response frame which is a response frame to the DPP configuration request frame. In an embodiment, the DPP configuration response frame may include at least one of configuration objects or discovery information. The configuration objects may include, for example, at least one of a network role (e.g., an NDP responder), or credential information (e.g., a multicast key), and the discovery information (peer information) may include at least one of device information (e.g., a MAC address, a service ID, and/or an application ID), group information (e.g., a multicast group ID), or a configurator ID.

In operation 2235, the first NAN device 2100 may receive the DPP configuration response frame and may transmit a DPP configuration result frame to the second NAN device 2110. In an embodiment, the DPP configuration result frame may include DPP status. As the DPP configuration operation as described above has been completed, the first NAN device 2100 may operate as an NDP responder and the second NAN device 2110 may operate as an NDP initiator. As described in FIGS. 20A and 20B, an operation 2237 of performing a DPP peer discovery operation, i.e., a DPP access operation, based on the NAN multicast schedule, or setting up a secure data path based on the DPP in the NAN network, that is, setting up a multicast NDP in a form of using a two-way handshake may be performed.

When the multicast NDP setup operation is completed in this way, a data communication may be performed between the first NAN device 2100 and the second NAN device 2110.

After being enrolled in the NMGS, the first NAN device 2100 may operate as the new enroller based on an attribute of the NMSG, and the third NAN device 2120 which is the enrollee may be enrolled in the NMSG through the first NAN device 2100. A detailed description of this is as follows.

In operation 2251, the first NAN device 2100 may transmit a publish message. The publish message in operation 2251 may include at least one of an NMSG ID which is an ID of an NMSG to which the first NAN device 2100 belongs, that is, which is configured by the second NAN device 2110, or a NAN multicast schedule. In operation 2253, the first NAN device 2100 may transmit a subscribe message. The subscribe message in operation 2253 may include at least one of the NMSG ID, the NAN multicast schedule, or device information, and the device information may include, for example, at least one of a device ID (device id) or a MAC address (mac address). In operation 2255, the third NAN device 2120 may transmit a publish message. The publish message in operation 2255 may include at least one of the NMSG ID which is the ID of the NMSG configured by the second NAN device 2110, the NAN multicast schedule, or bootstrapping information, and the bootstrapping information may include a public bootstrapping key to be used in at least one of a DPP authentication operation or a DPP configuration operation.

In operation 2257, the first NAN device 2100 may determine a device role of the first NAN device 2100. In an embodiment, the device role may be any one of a configurator or an enrollee. In an embodiment, it will be assumed that the first NAN device 2100 determined the device role of the first NAN device 2100 as the enrollee. In operation 2259, the third NAN device 2120 may determine a device role of the third NAN device 2120. In an embodiment, it will be assumed that the third NAN device 2120 determined the device role of the third NAN device 2120 as the enrollee. A case that the first NAN device 2100 determines the role of the first NAN device 2100 as the configurator may be similar to a case that a first NAN device 2000 determines a role of the first NAN device 2000 as the configurator in FIGS. 20A and 20B, so a detailed description thereof will be omitted.

In FIGS. 22A and 22B, at least one of a DPP authentication operation, a DPP configuration operation, or a DPP access operation between the first NAN device 2100 and the third NAN device 2120 may be performed based on the NAN multicast schedule. The first NAN device 2100 and the third NAN device 2120 may set up the NAN multicast schedule for performing the at least one of the DPP authentication operation, the DPP configuration operation, or the DPP access operation. In operation 2261, the first NAN device 2100 may transmit a multicast schedule request frame to the third NAN device 2120. The multicast schedule request frame may include at least one of an NDL attribute type request indicating an NDL attribute type of a request, and an NDL schedule initial proposal including a NAN availability attribute and a unaligned schedule attribute. In an embodiment, the NDL schedule initial proposal may indicate conditional or committed FAWs.

When receiving the multicast schedule request frame from the first NAN device 2100, the third NAN device 2120 may determine one of accepted status, counter status, and rejected status based on the NDL schedule initial proposal. In FIGS. 22A and 22B, it will be assumed that the first NAN device 2100 determined the accepted status. The accepted status, the counter status, and the rejected status have been described in detail in FIGS. 20A and 20B, so a detailed description thereof will be omitted herein.

The third NAN device 2120 determined the accepted status, so the third NAN device 2120 may transmit a multicast schedule response frame including a final NDL schedule compliant proposal to the first NAN device 2100 in operation 2263. According to an embodiment, when receiving the final NDL schedule compliant proposal, the first NAN device 2100 may not transmit a multicast schedule confirm frame to the third NAN device 2120. In an embodiment, the multicast schedule response frame may include an NDL attribute type response indicating an NDL attribute type of a response.

A NAN multicast schedule may be set up through a NAN multicast schedule setup operation including operations 2261 and 2263, and at least one of the DPP authentication operation, the DPP configuration operation, or the DPP access operation is performed through the set-up NAN multicast schedule, so the at least one of the DPP authentication operation, the DPP configuration operation, and the DPP access operation may be performed more quickly and with a higher success probability.

In an embodiment, the set-up NAN multicast schedule may be used as a data path schedule for a data path as well as for performing the at least one of the DPP authentication operation, the DPP configuration operation, or the DPP access operation. The at least one of the DPP authentication operation, the DPP configuration operation, or the DPP access operation to be described later may be performed based on the NAN multicast schedule set up through the NAN multicast schedule setup operation.

After the NAN multicast schedule is set up in this way, the first NAN device 2100 may transmit a DPP authentication request frame to the third NAN device 2120 in operation 2265. In an embodiment, the DPP authentication request frame may include at least one of a bootstrapping key or an intended device role. It has been assumed that the first NAN device 2100 determined the device role thereof as the configurator in operation 2257, so the intended device role may indicate the configurator.

In operation 2267, the third NAN device 2120 may receive the DPP authentication request frame, perform an authentication operation based on the received DPP authentication request frame, and transmit, to the first NAN device 2100, a DPP authentication response frame which is a response frame to the DPP authentication request frame based on a result of performing the authentication operation. For example, the third NAN device 2120 may determine whether the authentication operation has succeeded based on whether the bootstrapping key received from the first NAN device 2100 matches a bootstrapping key of the third NAN device 2120. In an embodiment, the DPP authentication response frame may include at least one of a DPP status field, a bootstrapping key, or an intended device role. The DPP status field may be as described in Table 9, so a detailed description thereof will be omitted. It has been assumed that the third NAN device 2120 determined the device role thereof as the enrollee in operation 2259, so the intended device role may indicate the enrollee. It will be assumed that the authentication operation is successful in operation 2267, so the DPP status field in the DPP authentication response frame may indicate STATUS_OK indicating that there is no error and abnormal operation.

The first NAN device 2100 may receive the DPP authentication response frame. The intended device role in the DPP authentication response frame is described as the enrollee, so first NAN device 2100 may determine the device role of the first NAN device 2100 as the configurator as it is. In operation 2269, the first NAN device 2100 may transmit a DPP authentication confirm frame to the third NAN device 2120 in response to the received DPP authentication response frame. In an embodiment, the DPP authentication confirm frame may include at least one of a DPP status field or a bootstrapping key.

The DPP authentication operation may be performed in a form of mutual authentication if NAN devices related to the DPP authentication operation acquire each other's bootstrapping key. The DPP authentication operation, as needed, may be performed in a form of authenticating only a NAN device transmitting connection request in a device receiving the connection request, or may be performed in a form of authenticating only a NAN device receiving a connection request in a NAN device transmitting the connection request. The DPP authentication operation may be implemented in various forms depending on whether the mutual authentication is required.

As the DPP authentication confirm frame is transmitted in this way, the DPP authentication operation may be completed between the first NAN device 2100 and the third NAN device 2120, and then the first NAN device 2100 may operate as the configurator and the third NAN device 2120 may operate as the enrollee. In operation 2271, the third NAN device 2120 may transmit a DPP configuration request frame to the first NAN device 2100. In operation 2273, the first NAN device 2100 may receive the DPP configuration request frame and transmit, to the third NAN device 2120, a DPP configuration response frame which is a response frame to the DPP configuration request frame. In an embodiment, the DPP configuration response frame may include at least one of configuration objects or discovery information. The configuration objects may include, for example, at least one of a network role (e.g., an NDP responder), or credential information (e.g., a multicast key), and the discovery information (peer information) may include at least one of device information (e.g., a MAC address, a service ID, and/or an application ID), group information (e.g., a multicast group ID), or a configurator ID.

In operation 2275, the third NAN device 2120 may receive the DPP configuration response frame and may transmit a DPP configuration result frame to the first NAN device 2100. In an embodiment, the DPP configuration result frame may include DPP status. As the DPP configuration operation has been completed, the third NAN device 2120 may operate as an NDP responder and the first NAN device 2100 may operate as an NDP initiator. As described in FIGS. 20A and 20B, the first NAN device 2100 and the third NAN device 2120 may perform an operation 2277 of performing a DPP peer discovery operation, i.e., a DPP access operation, based on the NAN multicast schedule, or setting up a secure data path based on the DPP in the NAN network, that is, setting up a multicast NDP in a form of using a two-way handshake.

As the multicast NDP setup operation has been completed in this way, a data communication may be performed between the first NAN device 2100 and the third NAN device 2120.

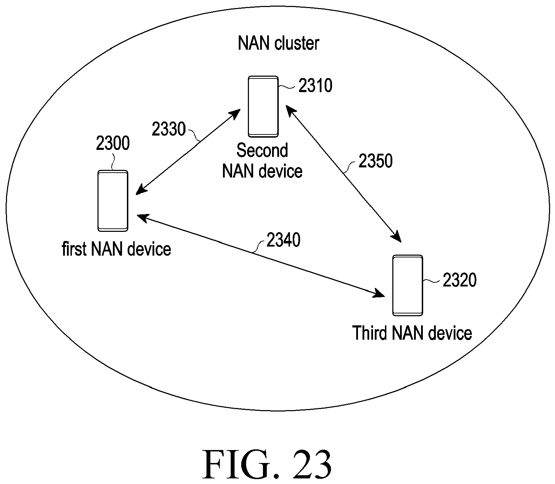

FIG. 23 is a diagram schematically illustrating an example of an operation of setting up a plurality of unicast NDPs based on a DPP in a NAN network according to various embodiments.

Referring to FIG. 23, a first NAN device 2300, a second NAN device 2310, and a third NAN device 2320 may be included in the same NAN cluster. In a case of an operation of setting up a plurality of unicast NDPs shown in FIG. 23, enrollees connected to the same configurator may use the same configuration object, so the enrollees may set up a unicast NDP without performing a DPP authentication operation, a DPP configuration operation, and a DPP access operation, and this may reduce time required for setting up the unicast NDP. In an embodiment, the unicast NDP may indicate an NDP for a unicast data communication, that is, for a unicast group. The unicast NDP may indicate an NDP used by a pair of NAN devices.

According to an embodiment, in operation 2330, the first NAN device 2300 may set up a unicast NDP with the second NAN device 2310 while operating as a configurator for the second NAN device 2310. In an embodiment, the first NAN device 2300 may transmit, to the second NAN device 2310, a configurator ID of the first NAN device 2300 as device information, i.e., peer information through a DPP configuration response frame.

According to an embodiment, in operation 2340, the first NAN device 2300 may set up a unicast NDP with the third NAN device 2320 while operating as a configurer for the third NAN device 2320. In an embodiment, the first NAN device 2300 may transmit, to the third NAN device 2320, a configurator ID of the first NAN device 2300 as device information, i.e., peer information through a DPP configuration response frame.

A case that the second NAN device 2310 and the third NAN device 2320 need to set up a unicast NDP may occur in a state in which the first NAN device 2300 sets up the unicast NDP with each of the second NAN device 2310 and the third NAN device 2320. In this case, each of the second NAN device 2310 and the third NAN device 2320 may transmit a configurator ID through a subscribe message or a publish message. So, the second NAN device 2310 and the third NAN device 2320 may recognize that the second NAN device 2310 and the third NAN device 2320 have the same configurator ID. According to an embodiment, in operation 2350, the second NAN device 2310 and the third NAN device 2320 may set up the unicast NDP without performing at least one of the DPP authentication operation, the DPP configuration operation, or the DPP access operation.

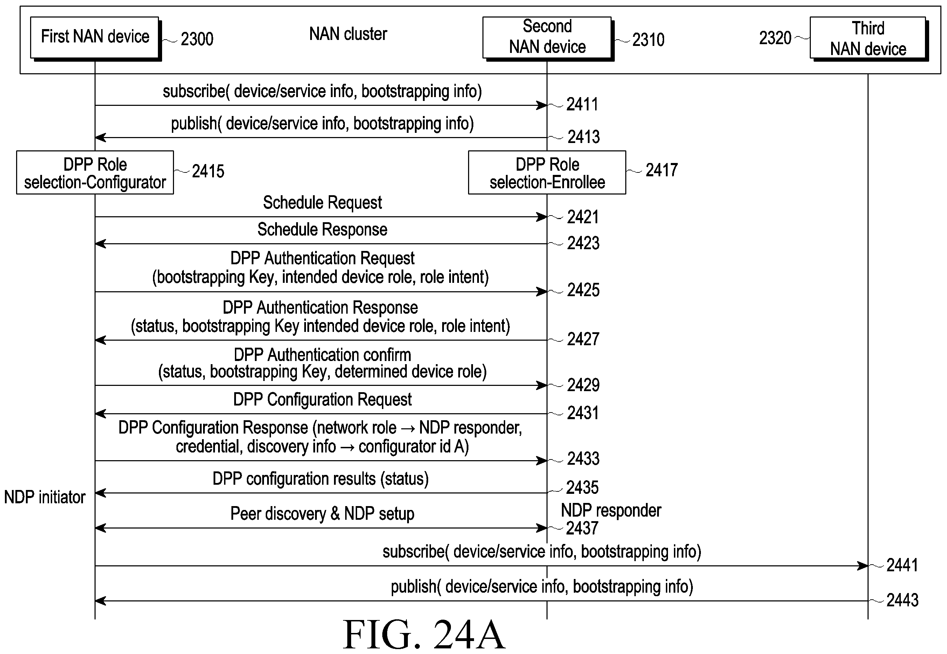

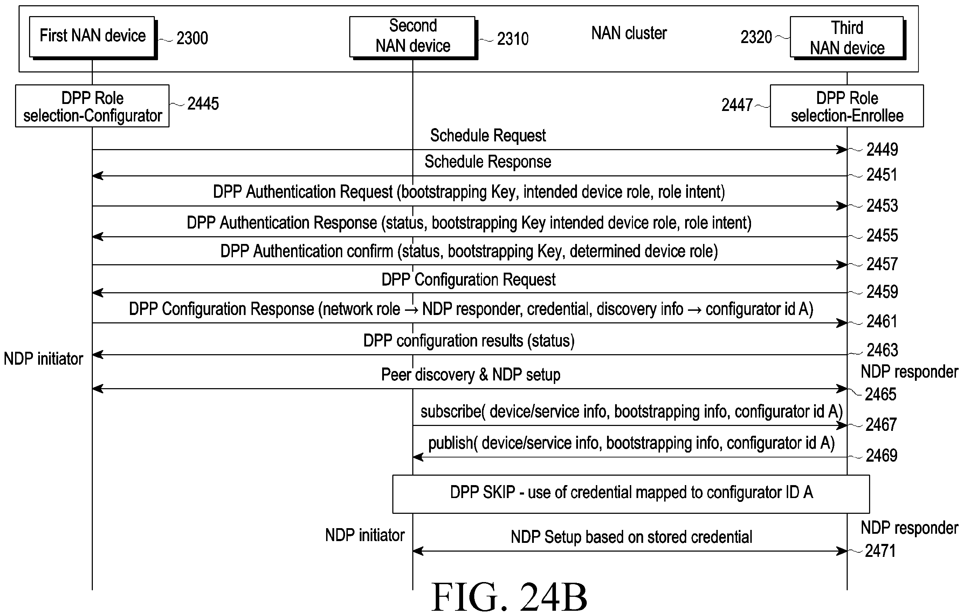

FIGS. 24A and 24B are signal flow diagrams schematically illustrating an example of setting up a plurality of unicast NDPs based on a DPP in a NAN network according to various embodiments.

Referring to FIGS. 24A and 24B, a first NAN device 2300, a second NAN device 2310, and a third NAN device 2320 may be included in the same NAN cluster. In a case of an operation of setting up a plurality of unicast NDPs shown in FIGS. 24A and 24B, enrollees connected to the same configurator may use the same configuration object, so the enrollees may set up a unicast NDP without performing at least one of a DPP authentication operation, a DPP configuration operation, or a DPP access operation, and this may reduce time required for setting up the unicast NDP. A detailed description of this is as follows.

In operation 2411, the first NAN device 2300 may transmit a subscribe message. The subscribe message in operation 2411 may include at least one of device/service information or bootstrapping information, the device information may include, for example, at least one of a device ID (device id) or a MAC address (mac address), and the bootstrapping information may include a bootstrapping key. In operation 2413, the second NAN device 2310 may transmit a publish message. The publish message in operation 2413 may include at least one of device/service information or bootstrapping information, the device information may include, for example, at least one of a device ID (device id) or a MAC address (mac address), and the bootstrapping information may include a bootstrapping key.

In operation 2415, the first NAN device 2300 may determine a device role of the first NAN device 2300. In an embodiment, the device role may be any one of a configurator or an enrollee. In an embodiment, it will be assumed that the first NAN device 2300 determined the device role of the first NAN device 2300 as the enrollee. In operation 2417, the second NAN device 2310 may determine a device role of the second NAN device 2310. In an embodiment, it will be assumed that the second NAN device 2310 determined the device role of the second NAN device 2310 as the enrollee. A case that the first NAN device 2300 determines the role of the first NAN device 2300 as the configurator may be similar to a case that a first NAN device 2000 determines a role of the first NAN device 2000 as the configurator in FIGS. 20A and 20B, so a detailed description thereof will be omitted.

In FIGS. 24a and 24b, at least one of a DPP authentication operation, a DPP configuration operation, or a DPP access operation between the first NAN device 2300 and the second NAN device 2310 may be performed based on a NAN schedule. The first NAN device 2300 and the second NAN device 2310 may set up the NAN schedule for performing the at least one of the DPP authentication operation, the DPP configuration operation, or the DPP access operation. According to an embodiment, in operation 2421, the first NAN device 2300 may transmit a schedule request frame to the second NAN device 2310. The schedule request frame may include at least one of an NDL attribute type request indicating an NDL attribute type of a request, or an NDL schedule initial proposal including a NAN availability attribute and a unaligned schedule attribute. In an embodiment, the NDL schedule initial proposal may indicate conditional or committed FAWs.

When receiving the schedule request frame from the first NAN device 2300, the second NAN device 2310 may determine one of accepted status, counter status, and rejected status based on the NDL schedule initial proposal. In FIGS. 24A and 24B, it will be assumed that the second NAN device 2310 determined the accepted status. The accepted status, the counter status, and the rejected status have been described in detail in FIGS. 20A and 20B, so a detailed description thereof will be omitted herein.

The second NAN device 2310 determined the accepted status, so the second NAN device 2310 may transmit a schedule response frame including a final NDL schedule compliant proposal to the first NAN device 2300 in operation 2423. According to an embodiment, when receiving the final NDL schedule compliant proposal, the first NAN device 2300 may not transmit a schedule confirm frame to the second NAN device 2310. In an embodiment, the schedule response frame may include an NDL attribute type response indicating an NDL attribute type of a response.

A NAN schedule may be set up through a NAN schedule setup operation including operations 2421 and 2423, and at least one of the DPP authentication operation, the DPP configuration operation, or the DPP access operation may be performed through the set-up NAN schedule, so the at least one of the DPP authentication operation, the DPP configuration operation, and the DPP access operation may be performed more quickly and with a higher success probability.

In an embodiment, the set-up NAN schedule may be used as an NDP schedule for an NDP as well as for performing one of the DPP authentication operation, the DPP configuration operation, or the DPP access operation. The at least one of the DPP authentication operation, the DPP configuration operation, or the DPP access operation to be described later may be performed based on the NAN schedule set up through the NAN schedule setup operation.

After the NAN schedule is set up in this way, the first NAN device 2300 may transmit a DPP authentication request frame to the second NAN device 2310 in operation 2425. In an embodiment, the DPP authentication request frame includes at least one of a bootstrapping key, an intended device role, or a role intent. It has been assumed that the first NAN device 2300 determined the device role thereof as the configurator in operation 2415, so the intended device role may indicate the configurator, and the role intent may indicate a determined role intent value.

In operation 2427, the second NAN device 2310 may receive the DPP authentication request frame, perform an authentication operation based on the received DPP authentication request frame, and transmit, to the first NAN device 2300, a DPP authentication response frame which is a response frame to the DPP authentication request frame based on a result of performing the authentication operation. The second NAN device 2310 may determine whether the authentication operation has succeeded based on whether the bootstrapping key received from the first NAN device 2300 matches a bootstrapping key of the second NAN device 2310. In an embodiment, the DPP authentication response frame may include at least one of a DPP status field, a bootstrapping key, an intended device role, or a role intent. The DPP status field may be as described in Table 9, so a detailed description thereof will be omitted.

It has been assumed that the second NAN device 2310 determined the device role thereof as the enrollee in operation 2417, so the intended device role may indicate the enrollee, and the role intent may indicate a role intent value. It will be assumed that the authentication operation is successful in operation 2427, so the DPP status field in the DPP authentication response frame may indicate STATUS_OK indicating that there is no error and abnormal operation.

The first NAN device 2300 may receive the DPP authentication response frame. The intended device role in the DPP authentication response frame is described as the enrollee, so the first NAN device 2300 may determine the device role of the first NAN device 2300 as the configurator as it is. In operation 2429, the first NAN device 2300 may transmit a DPP authentication confirm frame to the second NAN device 2310 in response to the received DPP authentication response frame. In an embodiment, the DPP authentication confirm frame may include at least one of a DPP status field, a bootstrapping key, or a determined device role, and the determined device role may represent a determined device role, i.e., the configurator, for the first NAN device 2300.

The DPP authentication operation may be performed in a form of mutual authentication if NAN devices related to the DPP authentication operation acquire each other's bootstrapping key. The DPP authentication operation, as needed, may be performed in a form of authenticating only a NAN device transmitting connection request in a device receiving the connection request, or may be performed in a form of authenticating only a NAN device receiving a connection request in a NAN device transmitting the connection request. The DPP authentication operation may be implemented in various forms depending on whether the mutual authentication is required.

As the DPP authentication confirm frame is transmitted in this way, the DPP authentication operation may be completed between the first NAN device 2300 and the second NAN device 2310, and then the first NAN device 2300 may operate as the configurator and the second NAN device 2310 may operate as the enrollee. In operation 2431, the second NAN device 2310 may transmit a DPP configuration request frame to the first NAN device 2300. In operation 2433, the first NAN device 2300 may receive the DPP configuration request frame and transmit, to the second NAN device 2310, a DPP configuration response frame which is a response frame to the DPP configuration request frame. In an embodiment, the DPP configuration response frame may include at least one of configuration objects or discovery information. The configuration objects may include, for example, at least one of a network role (e.g., an NDP responder), or credential information, and the discovery information (peer information) may include device information (e.g., a configurator ID (e.g., a configurator ID A)).

In operation 2435, the second NAN device 2310 may receive the DPP configuration response frame and may transmit a DPP configuration result frame to the first NAN device 2300. In an embodiment, the DPP configuration result frame may include DPP status. As the DPP configuration operation has been completed, the first NAN device 2300 may operate as an NDP initiator and the second NAN device 2310 may operate as an NDP responder. As described in FIGS. 20A and 20B, the first NAN device 2300 and the second NAN device 2310 may perform an operation 2437 of performing a DPP peer discovery operation, i.e., a DPP access operation, based on the NAN schedule, or setting up an NDP based on the DPP in the NAN network, that is, setting up a unicast NDP in a form of using a two-way handshake.

As the NDP setup operation has been completed in this way, a data communication may be performed between the first NAN device 2300 and the second NAN device 2310.

In operation 2441, the first NAN device 2300 may transmit a subscribe message. The subscribe message in operation 2441 may include at least one of device/service information or bootstrapping information, the device information may include, for example, at least one of a device ID (device id) or a MAC address (mac address), and the bootstrapping information may include a bootstrapping key. In operation 2443, the third NAN device 2320 may transmit a publish message. The publish message in operation 2443 may include at least one of device/service information or bootstrapping information, the device information may include, for example, at least one of a device ID (device id) and a MAC address (mac address), and the bootstrapping information may include a bootstrapping key.

In operation 2445, the first NAN device 2300 may determine a device role of the first NAN device 2300. In an embodiment, the device role may be any one of a configurator or an enrollee. In an embodiment, it will be assumed that the first NAN device 2300 determined the device role of the first NAN device 2300 as the enrollee. In operation 2447, the third NAN device 2320 may determine a device role of the third NAN device 2320. In an embodiment, it will be assumed that the third NAN device 2320 determined the device role of the third NAN device 2320 as the enrollee. A case that the first NAN device 2300 determines the role of the first NAN device 2300 as the configurator may be similar to a case that a first NAN device 2000 determines a role of the first NAN device 2000 as the configurator in FIGS. 20A and 20B, so a detailed description thereof will be omitted.

In FIGS. 24A and 24B, at least one of a DPP authentication operation, a DPP configuration operation, or a DPP access operation between the first NAN device 2300 and the third NAN device 2320 may be performed based on the NAN schedule. The first NAN device 2300 and the third NAN device 2320 may set up the NAN schedule for performing the DPP authentication operation, the DPP configuration operation, or the DPP access operation. According to an embodiment, in operation 2449, the first NAN device 2300 may transmit a schedule request frame to the third NAN device 2320. The schedule request frame may include at least one of an NDL attribute type request indicating an NDL attribute type of a request, or an NDL schedule initial proposal including a NAN availability attribute and a unaligned schedule attribute. In an embodiment, the NDL schedule initial proposal may indicate conditional or committed FA W s.

When receiving the schedule request frame from the first NAN device 2300, the third NAN device 2320 may determine one of accepted status, counter status, and rejected status based on the NDL schedule initial proposal. In FIGS. 24A and 24B, it will be assumed that the third NAN device 2320 determined the accepted status. The accepted status, the counter status, and the rejected status have been described in detail in FIGS. 20A and 20B, so a detailed description thereof will be omitted herein.

The third NAN device 2320 determined the accepted status, so the third NAN device 2320 may transmit a schedule response frame including a final NDL schedule compliant proposal to the first NAN device 2300 in operation 2451. According to an embodiment, when receiving the final NDL schedule compliant proposal, the first NAN device 2300 may not transmit a schedule confirm frame to the third NAN device 2320. In an embodiment, the schedule response frame may include an NDL attribute type response indicating an NDL attribute type of a response.

A NAN multicast schedule may be set up through a NAN schedule setup operation including operations 2449 and 2451, and at least one of the DPP authentication operation, the DPP configuration operation, or the DPP access operation is performed through the set-up NAN schedule, so the at least one of the DPP authentication operation, the DPP configuration operation, and the DPP access operation may be performed more quickly and with a higher success probability.

The set-up NAN schedule may be used as an NDP schedule for an NDP as well as for performing the at least one of the DPP authentication operation, the DPP configuration operation, or the DPP access operation. The at least one of the DPP authentication operation, the DPP configuration operation, or the DPP access operation may be performed based on the NAN schedule set up through the NAN schedule setup operation.

After the NAN schedule is set up in this way, the first NAN device 2300 may transmit a DPP authentication request frame to the third NAN device 2320 in operation 2453. In an embodiment, the DPP authentication request frame may include at least one of a bootstrapping key, an intended device role, or a role intent. It has been assumed that the first NAN device 2300 determined the device role thereof as the configurator in operation 2445, so the intended device role may indicate the configurator, and the role intent may indicate a determined role intent value.

In operation 2455, the third NAN device 2320 may receive the DPP authentication request frame, perform an authentication operation based on the received DPP authentication request frame, and transmit, to the first NAN device 2300, a DPP authentication response frame which is a response frame to the DPP authentication request frame based on a result of performing the authentication operation. In an embodiment, the third NAN device 2320 may determine whether the authentication operation has succeeded based on whether the bootstrapping key received from the first NAN device 2300 matches a bootstrapping key of the third NAN device 2320. In an embodiment, the DPP authentication response frame may include at least one of a DPP status field, a bootstrapping key, an intended device role, or a role intent. The DPP status field may be as described in Table 9, so a detailed description thereof will be omitted. It has been assumed that the third NAN device 2320 determined the device role thereof as the enrollee in operation 2447, so the intended device role may indicate the enrollee, and the role intent may indicate a determined role intent value. It will be assumed that the authentication operation is successful in operation 2455, so the DPP status field in the DPP authentication response frame may indicate STATUS_OK indicating that there is no error and abnormal operation.

The first NAN device 2300 may receive the DPP authentication response frame. The intended device role in the DPP authentication response frame is described as the enrollee, so first NAN device 2300 may determine the device role of the first NAN device 2300 as the configurator as it is. In operation 2457, the first NAN device 2300 may transmit a DPP authentication confirm frame to the third NAN device 2320 in response to the received DPP authentication response frame. In an embodiment, the DPP authentication confirm frame may include at least one of a DPP Status field, a bootstrapping key, or a determined device role, and the determined device role may represent a determined device role, i.e., the configurator, for the first NAN device 2300.

The DPP authentication operation may be performed in a form of mutual authentication if NAN devices related to the DPP authentication operation acquire each other's bootstrapping key. The DPP authentication operation, as needed, may be performed in a form of authenticating only a NAN device transmitting connection request in a device receiving the connection request, or may be performed in a form of authenticating only a NAN device receiving a connection request in a NAN device transmitting the connection request. The DPP authentication operation may be implemented in various forms depending on whether the mutual authentication is required.

As the DPP authentication confirm frame is transmitted in this way, the DPP authentication operation may be completed between the first NAN device 2300 and the third NAN device 2320, and then the first NAN device 2300 may operate as the configurator and the third NAN device 2320 may operate as the enrollee. In operation 2459, the third NAN device 2320 may transmit a DPP configuration request frame to the first NAN device 2300. In operation 2461, the first NAN device 2300 may receive the DPP configuration request frame and transmit, to the third NAN device 2320, a DPP configuration response frame which is a response frame to the DPP configuration request frame. In an embodiment, the DPP configuration response frame may include at least one of configuration objects or discovery information. The configuration objects may include, for example, at least one of a network role (e.g., an NDP responder), credential information, and the discovery information (peer information) may include device information (e.g., a configurator ID (e.g., a configurator ID A)).

In operation 2461, the third NAN device 2320 may receive the DPP configuration response frame and may transmit a DPP configuration result frame to the first NAN device 2300. In an embodiment, the DPP configuration result frame may include DPP Status. As the DPP configuration operation has been completed, the first NAN device 2300 may operate as an NDP initiator and the third NAN device 2320 may operate as an NDP responder. As described in FIGS. 20A and 20B, the first NAN device 2300 and the third NAN device 2320 may perform an operation 2465 of performing a DPP peer discovery operation, i.e., a DPP access operation, based on the NAN schedule, or setting up an NDP based on the DPP in the NAN network, that is, setting up a unicast NDP in a form of using a two-way handshake.

As the NDP setup operation has been completed in this way, a data communication may be performed between the first NAN device 2300 and the third NAN device 2320.

A case that a unicast NDP between the second NAN device 2310 and the third NAN device 2320 needs to be set up may occur in a state in which a unicast NDP between the first NAN device 2300 and the second NAN device 2310 is set up and a unicast NDP between the first NAN device 2300 and the third NAN device 2320 is set up. A detailed description of this is as follows.

According to an embodiment, in operation 2467, the second NAN device 2310 may transmit a subscribe message. The subscribe message in operation 2467 may include at least one of device/service information, bootstrapping information, or a configurator ID, e.g., a configurator ID A, the device information may include, for example, at least one of a device ID (device id) or a MAC address(mac addresses), and the bootstrapping information may include a bootstrapping key. In operation 2469, the third NAN device 2320 may transmit a publish message. The publish message in operation 2469 may include at least one of device/service information, bootstrapping information, or a configurator ID, e.g., a configurator ID A, the device information may include, for example, at least one of a device ID (device id) or a MAC address (mac address), and the bootstrapping information may include a bootstrapping key.

The second NAN device 2310 and the third NAN device 2320 may know that the configurator ID stored in each other is the same as the configurator ID A through the subscribe message and the publish message. The second NAN device 2310 and the third NAN device 2320 may use credential information mapped to the configurator ID A as it is, so the second NAN device 2310 and the third NAN device 2320 do not need to perform at least one of the DPP authentication operation, the DPP configuration operation, and the DPP access operation.

In operation 2471, the second NAN device 2310 and the third NAN device 2320 may set up a unicast NDP based on the stored credential information mapped to the same configurator ID A, respectively.

Various embodiments of the disclosure may provide an electronic device for efficiently setting up a data path and an operating method thereof.

Various embodiments of the disclosure may provide an electronic device for efficiently setting up a data path for an NMSG in a NAN network and an operating method.

Various embodiments of the disclosure may provide an electronic device for setting up a data path for a plurality of unicast groups in a NAN network and an operating method.

Various embodiments of the disclosure may provide an electronic device for setting up a data path based on a provisioning procedure of a DPP in a NAN network and an operating method thereof.

Various embodiments of the disclosure may provide an electronic device for setting up a data path for an NMSG based on a provisioning procedure of a DPP in a NAN network and an operating method thereof.

Various embodiments of the disclosure may provide an electronic device for setting up a data path for a plurality of unicast groups based on a provisioning procedure of a DPP in a NAN network and an operating method thereof.

According to various embodiments of the disclosure, a method performed by an electronic device 101 (e.g., an electronic device 101 in FIG. 1) may include performing a service discovery operation based on first security information through a discovery window (DW) to discover an external electronic device 102 or 104 (e.g., an electronic device 102 or an electronic device 104 in FIG. 1), setting up a schedule with the external electronic device 102 or 104, performing, through the set-up schedule, an authentication operation with the external electronic device 102 or 104 based on the first security information to determine a device role of the electronic device 101 in a network including the electronic device 101 and the external electronic device 102 or 104, receiving, from the external electronic device 102 or 104, a first message requesting network configuration information related to configuration of the network based on the device role through the set-up schedule, and transmitting, to the external electronic device 102 or 104, a second message including network configuration information which includes a network role of the external electronic device 102 or 104 in the network, second security information used to set up a data path with the external electronic device 102 or 104, and discovery information used for a peer discovery operation, through the set-up schedule.

According to various embodiments of the disclosure, the method performed by the electronic device 101 may further include performing, through the set-up schedule, the peer discovery operation with the external electronic device 102 or 104 based on the discovery information to verify the external electronic device 102 or 104.

According to various embodiments of the disclosure, the method performed by the electronic device 101 may further include setting up a data path with the external electronic device 102 or 104 through the set schedule.

According to various embodiments of the disclosure, setting up the data path with the external electronic device 102 or 104 through the set-up schedule may include transmitting, in the set-up schedule, a data path confirm message to the external electronic device 102 or 104, receiving, in the set-up schedule, a data path security install message including third security information in response to the data path confirm message, and setting up the data path with the external electronic device 102 or 104 if the second security information and the third security information match.

According to various embodiments of the disclosure, performing, through the set-up schedule, the authentication operation with the external electronic device 102 or 104 based on the first security information to determine the device role of the electronic device 101 in the network including the electronic device 101 and the external electronic device 102 or 104 may include transmitting, to the external electronic device 102 or 104, an authentication request message including the first security information and first device role information indicating a device role intended by the electronic device 101 through set-up schedule, receiving, from the external electronic device 102 or 104, an authentication response message including first status information indicating status related to the authentication request message, the first security information, and second device role information indicating a device role intended by the external electronic device 102 or 104 through the set-up schedule, and transmitting, to the external electronic device 102 or, an authentication confirm message including second status information indicating status related to the authentication response message, the first security information, and device role information indicating the device role of the electronic device 101 104 through the set-up schedule.

According to various embodiments of the disclosure, if a device role intended by the electronic device 101 indicated by the first device role information and a device role intended by the external electronic device 102 or 104 indicated by the second device role information are the same, the device role information may be determined based on a first value included in the authentication request message and a second value included in the authentication response message.

According to various embodiments of the disclosure, performing the service discovery operation based on the first security information through the DW to discover the external electronic device 102 or 104 may include receiving, through the DW, a publish message from the external electronic device 102 or 104, and discovering the external electronic device 102 or 104 if the publish message includes authentication information identical to the first authentication information.

According to various embodiments of the disclosure, the device role of the electronic device 101 may be a configurator providing the network configuration information, the device role of the external electronic device 102 or 104 may be an enrollee which is enrolled in the network managed by the configurator, the network role of the electronic device 101 may be a data path initiator requesting setup of the data path, or the network role of the external electronic device 102 or 104 may be a data path responder responding to the request for the setup of the data path.

According to various embodiments of the disclosure, a method performed by an electronic device (e.g., an electronic device 101 in FIG. 1) may include performing, in a discovery window (DW), a service discovery operation based on first security information to discover an external electronic device (e.g., an electronic device 102 or an electronic device 104 in FIG. 1), setting up a multicast schedule with the external electronic device 102 or 104, performing an authentication operation with the external electronic device 102 or 104 based on the first security information to determine a device role of the electronic device 101 in a network including the electronic device 101 and the external electronic device 102 or 104 through the set-up multicast schedule, transmitting, to the external electronic device 102 or 104, a first message requesting network configuration information related to configuration of the network based on the device role through the set-up multicast schedule, and receiving, from the external electronic device 102 or 104, a second message including network configuration information which includes a network role of the electronic device 101 in the network, second security information used to set up a data path with the external electronic device 102 or 104, and discovery information used for a peer discovery operation, through the set-up multicast schedule.

According to various embodiments of the disclosure, the method performed by the electronic device 101 may further include performing, through the set-up multicast schedule, the peer discovery operation with the external electronic device 102 or 104 based on the discovery information to verify the external electronic device 102 or 104.

According to various embodiments of the disclosure, the method performed by the electronic device 101 may further include setting up a data path with the external electronic device 102 or 104 through the set-up multicast schedule.

According to various embodiments of the disclosure, the method performed by the electronic device 101 (e.g., the electronic device 101 in FIG. 1) may include discovering, through the DW, another external electronic device 102 or 104 (e.g., an electronic device 102 or an electronic device 104 in FIG. 1) based on the first security information, setting up another multicast schedule with the other external electronic device 102 or 104, performing, through the set-up other multicast schedule, an authentication operation with the other external electronic device 102 or 104 based on the first security information to re-determine the device role of the electronic device 101 in the network including the electronic device 101 and the other external electronic device 102 or 104, receiving, from the other external electronic device 102 or 104, a third message requesting network configuration information related to the configuration of the network based on the re-determined device role through the set-up other multicast schedule, and transmitting, to the other external electronic device 102 or 104, a fourth message including a network role of the other external electronic device 102 or 104 in the network, and third security information used to set up another data path with the other external electronic device 102 or 104 in the set-up other multicast schedule.

## Claims

1. An electronic device, comprising:
a communication circuit; and
at least one processor operatively connected to the communication circuit, wherein the at least one processor is configured to:
perform, through the communication circuit, a service discovery operation based on first security information in a discovery window (DW) to discover an external electronic device,
set up, through the communication circuit, a schedule with the external electronic device, perform, in the set-up schedule, an authentication operation with the external electronic device based on the first security information to determine a device role of the electronic device in a network including the electronic device and the external electronic device,
receive, through the communication circuit, a first message requesting network configuration information related to configuration of the network, from the external electronic device in the set-up schedule based on the device role, and
transmit, through the communication circuit, a second message including network configuration information which includes a network role of the external electronic device in the network, second security information used to set up a data path with the external electronic device, and discovery information used for a peer discovery operation, to the external electronic device in the set-up schedule.

2. The electronic device of claim 1, wherein the at least one processor is further configured to:
perform, through the communication circuit, the peer discovery operation with the external electronic device based on the discovery information in the set-up schedule to verify the external electronic device.

3. The electronic device of claim 2, wherein the at least one processor is further configured to:
set up, through the communication circuit, a data path with the external electronic device in the set-up schedule.

4. The electronic device of claim 3, wherein the at least one processor is configured to:
transmit, through the communication circuit, a data path confirm message to the external electronic device in the set-up schedule,
receive, through the communication circuit, a data path security install message including third security information in the set-up schedule in response to the data path confirm message, and
set up the data path with the external electronic device through the communication circuit if the second security information and the third security information match.

5. The electronic device of claim 1, wherein the at least one processor is configured to:
transmit, through the communication circuit, an authentication request message including the first security information and first device role information indicating a device role intended by the electronic device, to the external electronic device in the set-up schedule,
receive, through the communication circuit, an authentication response message including first status information indicating status related to the authentication request message, the first security information, and second device role information indicating a device role intended by the external electronic device from the external electronic device in the set-up schedule, and
transmit, through the communication circuit, an authentication confirm message including second status information indicating status related to the authentication response message, the first security information, and device role information indicating the device role of the electronic device to the external electronic device in the set-up schedule to determine the device role of the electronic device.

6. The electronic device of claim 1, wherein the at least one processor is configured to:
receive, through the communication circuit, a publish message from the external electronic device in the DW, and
discover the external electronic device if the publish message includes authentication information identical to the first authentication information.

7. The electronic device of claim 1, wherein the device role of the electronic device is a configurator providing the network configuration information,
wherein the device role of the external electronic device is an enrollee which is enrolled in the network managed by the configurator,
wherein the network role of the electronic device is a data path initiator requesting setup of the data path, or
wherein the network role of the external electronic device is a data path responder responding to the request for the setup of the data path.

8. An electronic device, comprising:
a communication circuit; and
at least one processor operatively connected to the communication circuit, wherein the at least one processor is configured to:
perform, through the communication circuit, a service discovery operation based on first security information in a discovery window (DW) to discover an external electronic device,
set up, through the communication circuit, a multicast schedule with the external electronic device,
perform an authentication operation with the external electronic device based on the first security information in the set-up multicast schedule to determine a device role of the electronic device in a network including the electronic device and the external electronic device,
transmit, through the communication circuit, a first message requesting network configuration information related to configuration of the network to the external electronic device based on the device role in the set-up multicast schedule, and
receive, through the communication circuit, a second message including network configuration information which includes a network role of the electronic device in the network, second security information used to set up a data path with the external electronic device, and discovery information used for a peer discovery operation, from the external electronic device in the set-up multicast schedule.

9. The electronic device of claim 8, wherein the at least one processor is further configured to:
perform, through the communication circuit, the peer discovery operation with the external electronic device based on the discovery information in the set-up multicast schedule to verify the external electronic device.

10. The electronic device of claim 9, wherein the at least one processor is further configured to:
set up, through the communication circuit, a data path with the external electronic device in the set-up multicast schedule.

11. The electronic device of claim 9, wherein the at least one processor is further configured to:
discover, through the communication circuit, another external electronic device based on the first security information in the DW,
set up, through the communication circuit, another multicast schedule with the other external electronic device,
perform an authentication operation with the other external electronic device based on the first security information to re-determine the device role of the electronic device in the network including the electronic device and the other external electronic device in the set-up other multicast schedule,
receive, through the communication circuit, a third message requesting network configuration information related to the configuration of the network based on the re-determined device role from the other external electronic device in the set-up other multicast schedule, and
transmit, through the communication circuit, a fourth message including a network role of the other external electronic device in the network, and third security information used to set up another data path with the other external electronic device to the other external electronic device in the set-up other multicast schedule.

12. A method performed by an electronic device, the method comprising:
performing a service discovery operation based on first security information through a discovery window (DW) to discover an external electronic device;
setting up a schedule with the external electronic device;
performing, through the set-up schedule, an authentication operation with the external electronic device based on the first security information to determine a device role of the electronic device in a network including the electronic device and the external electronic device;
receiving, from the external electronic device, a first message requesting network configuration information related to configuration of the network based on the device role through the set-up schedule; and
transmitting, to the external electronic device, a second message including network configuration information which includes a network role of the external electronic device in the network, second security information used to set up a data path with the external electronic device, and discovery information used for a peer discovery operation, through the set-up schedule.

13. The method of claim 12, further comprising:
performing, through the set-up schedule, the peer discovery operation with the external electronic device based on the discovery information to verify the external electronic device.

14. The method of claim 12, wherein performing, through the set-up schedule, the authentication operation with the external electronic device based on the first security information to determine the device role of the electronic device in the network including the electronic device and the external electronic device comprises:
transmitting, to the external electronic device, an authentication request message including the first security information and first device role information indicating a device role intended by the electronic device through the set-up schedule;
receiving, from the external electronic device, an authentication response message including first status information indicating status related to the authentication request message, the first security information, and second device role information indicating a device role intended by the external electronic device through the set-up schedule; and
transmitting, to the external electronic device, an authentication confirm message including second status information indicating status related to the authentication response message, the first security information, and device role information indicating the device role of the electronic device through the set-up schedule.

15. The method of claim 12, wherein performing the service discovery operation based on the first security information through the DW to discover the external electronic device comprises:
receiving, through the DW, a publish message from the external electronic device; and
discovering the external electronic device if the publish message includes authentication information identical to the first authentication information.
